# EUROPEAN PATENT APPLICATION

(11) **EP 3 633 566 A1**
(43) Date of publication of application: **08.04.2020**
(21) Application number: 18805685.7
(22) Date of filing: 11.05.2018
(51) Int. Cl.: G06Q 10/08, G06Q 10/04, B65G 61/00, B60P 3/00

(54) **DELIVERY MANAGEMENT DEVICE, PARCEL DELIVERY SYSTEM, AND PROGRAM**

(30) Priority: 26.05.2017 JP 2017104703
(71) Applicant: Sony Corporation, Tokyo 108-0075 (JP)
(72) Inventor: MIGITA, Takahito, Tokyo 108-0075 (JP)
(74) Representative: Witte, Weller & Partner Patentanwälte mbB
(86) International application number: PCT/JP2018/018254
(87) International publication number: WO 2018/216502

(57) **Abstract**

The present technology relates to a delivery management device, a baggage delivery system, and a program that can implement optimized delivery.

A creation unit of the delivery management device creates a delivery plan for a moving body on the basis of at least one of a loading time for loading baggage into the moving body or a pickup time for picking up the baggage from the moving body, and a lap time via at least two points of a loading point for loading the baggage and a pickup point for picking up the baggage. The moving body includes a box, and the baggage is loaded into the box. The moving body moves to each destination on the basis of the delivery plan, and delivers the baggage to a pickup person. The present technology is applicable to a case where the baggage is delivered to a plurality of pickup persons.

## Description

### TECHNICAL FIELD

The present technology relates to a delivery management device, a baggage delivery system, and a program, and more particularly to a delivery management device, a baggage delivery system, and a program that can implement optimized delivery.

### BACKGROUND ART

In a case of buying a product at a store, a buyer goes to a predetermined store, searches for the product, and places an order. In a case where one store does not have the desired product, the buyer needs to move to another store that sells the desired product, and the buyer takes the bought product back.

Meanwhile, the number of users of Internet mail order sites (electronic commerce (EC) sites) has been increasing in recent years. The EC sites allow quick search for a desired product by a search function. Then, in a case where a product is bought in the EC sites, the product is delivered to the buyer's home, which is convenient.

As products bought in the EC sites increase, the number of products to transport increases, increasing the burden on delivery companies. In particular, in a case where a resident of a delivery destination (in other words, baggage consignee) is not at home, re-delivery has to be made and delivery efficiency decreases. Therefore, various proposals have been made (for example, Patent Document 1).

Patent Document 1 proposes, for example, in a case where a client finds out that the consignee is traveling and is not at home, to enable changing delivery date and time in response to client's order.

### CITATION LIST

### PATENT DOCUMENT

Patent Document 1: Japanese Patent Application Laid-Open No. H10-149386

### SUMMARY OF THE INVENTION

### PROBLEMS TO BE SOLVED BY THE INVENTION

The proposal of Patent Document 1 inhibits re-delivery and enables efficient collection and delivery.

However, it is difficult for this proposal to implement optimized delivery.

The present technology has been made in view of such a status, and makes it possible to implement optimized delivery.

### SOLUTIONS TO PROBLEMS

One aspect of the present technology is a delivery management device for managing delivery of baggage by a moving body, the delivery management device including: a creation unit configured to create a delivery plan for the moving body on the basis of at least one of a loading time for loading the baggage into the moving body or a pickup time for picking up the baggage from the moving body, and a lap time via at least two points of a loading point for loading the baggage and a pickup point for picking up the baggage.

The loading time can be a time from an order time of a first delivery request to a departure time from the loading point. The pickup time can be a time from an estimated time of arrival of the moving body at the pickup point to a start time of a desired delivery time zone.

The delivery plan can be further created on the basis of the number of pickup points and the estimated time of arrival.

The delivery plan can be further created on the basis of the number of moving bodies.

The delivery plan can be created on the basis of both the loading time and the pickup time.

One aspect of the present technology is a baggage delivery system including: a moving body configured to deliver loaded baggage; and a server configured to create a delivery plan for the moving body on the basis of at least one of a loading time for loading the baggage into the moving body or a pickup time for picking up the baggage from the moving body, and a lap time via at least two points of a loading point for loading the baggage and a pickup point for picking up the baggage.

One aspect of the present technology is a program for causing a computer to perform processing to create a delivery plan for a moving body that delivers loaded baggage, the program including: a step of creating a delivery plan for the moving body on the basis of at least one of a loading time for loading the baggage into the moving body or a pickup time for picking up the baggage from the moving body, and a lap time via at least two points of a loading point for loading the baggage and a pickup point for picking up the baggage.

According to one aspect of the present technology, in a delivery management device for managing delivery of baggage by a moving body, a creation unit creates a delivery plan for the moving body on the basis of at least one of a loading time for loading the baggage into the moving body or a pickup time for picking up the baggage from the moving body, and a lap time via at least two points of a loading point for loading the baggage and a pickup point for picking up the baggage.

### EFFECTS OF THE INVENTION

As described above, one aspect of the present technology can implement optimized delivery. Note that effects described in the present specification are merely illustrative and not restrictive, and additional effects may be produced.

### BRIEF DESCRIPTION OF DRAWINGS

Fig. 1 is a diagram for describing a baggage order taking and delivery area.
Fig. 2 is a diagram showing a configuration of a baggage delivery system.
Fig. 3 is a diagram for describing order placement processing in a normal scenario.
Fig. 4 is a flowchart for describing product buying processing.
Fig. 5 is a flowchart for describing delivery plan creation processing.
Fig. 6 is a diagram for describing a delivery plan.
Fig. 7 is a flowchart for describing delivery order processing.
Fig. 8 is a flowchart for describing loading processing.
Fig. 9 is a diagram for describing loading baggage.
Fig. 10 is a diagram for describing delivery processing in a normal scenario.
Fig. 11 is a flowchart for describing departure processing.
Fig. 12 is a flowchart for describing moving and arrival processing.
Fig. 13 is a flowchart for describing pickup processing.
Fig. 14 is a flowchart for describing return processing.
Fig. 15 is a flowchart for describing buying cancel processing.
Fig. 16 is a flowchart for describing delivery cancel processing.
Fig. 17 is a flowchart for describing re-delivery processing.
Fig. 18 is a flowchart for describing processing in a case where a cart cannot move.
Fig. 19 is a flowchart for describing processing in a case where a customer does not appear.
Fig. 20 is a flowchart for describing processing in a case where a user has left items.
Fig. 21 is a block diagram showing an exemplary configuration of a delivery management system.
Fig. 22 is a flowchart for describing delivery plan creation processing.
Fig. 23 is a diagram for describing a delivery state.
Fig. 24 is a diagram for describing a delivery plan.
Fig. 25 is a diagram for describing a delivery plan.
Fig. 26 is a diagram for describing a delivery plan.
Fig. 27 is a diagram for describing a delivery plan.
Fig. 28 is a diagram for describing a delivery plan.
Fig. 29 is a diagram for describing a delivery plan.
Fig. 30 is a block diagram showing an exemplary configuration of the delivery management system.
Fig. 31 is a flowchart for describing usage time zone search processing.
Fig. 32 is a diagram for describing the delivery state.
Fig. 33 is a diagram for describing a delivery plan.
Fig. 34 is a diagram for describing usage time zone search.
Fig. 35 is a diagram for describing the usage time zone search.
Fig. 36 is a view showing a user interface of a buying site.
Fig. 37 is a view showing a user interface of the buying site.
Fig. 38 is a view showing a user interface of a delivery site.
Fig. 39 is a view showing a user interface of the delivery site.
Fig. 40 is a view showing a user interface of the delivery site.
Fig. 41 is a view showing a user interface of the delivery site.
Fig. 42 is a view showing a user interface of the delivery site.
Fig. 43 is a view showing a user interface of the delivery site.
Fig. 44 is a view showing a user interface of an operator site.
Fig. 45 is a view showing a user interface of the operator site.
Fig. 46 is a view showing a user interface of an administration site.
Fig. 47 is a view showing a user interface of the administration site.
Fig. 48 is a view showing a user interface of a key application.
Fig. 49 is a view showing a user interface of the key application.
Fig. 50 is a block diagram showing an exemplary configuration of a personal computer.

### MODE FOR CARRYING OUT THE INVENTION

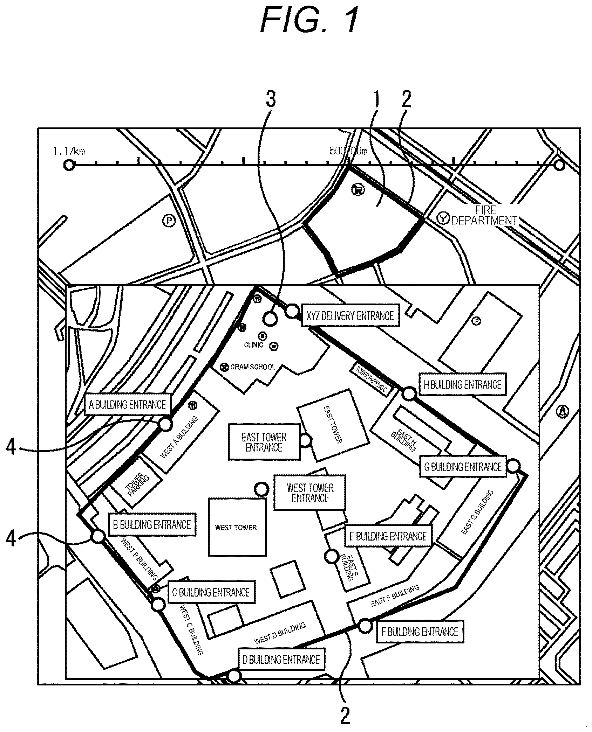

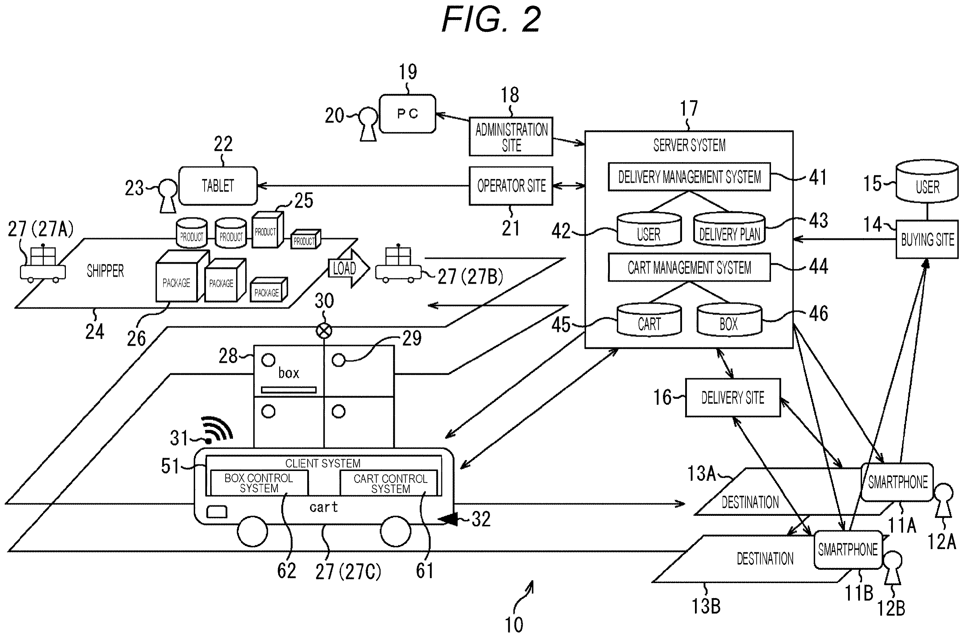

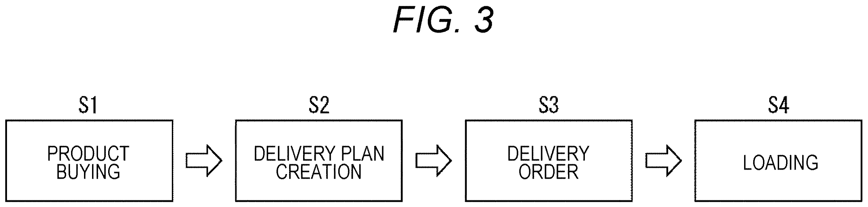

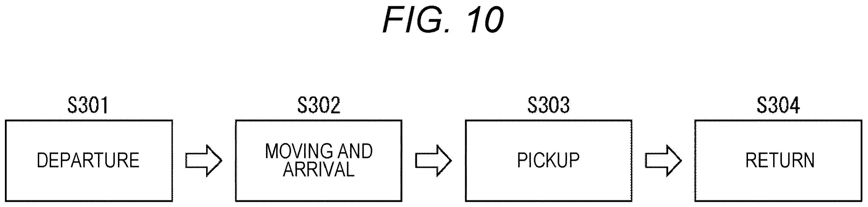

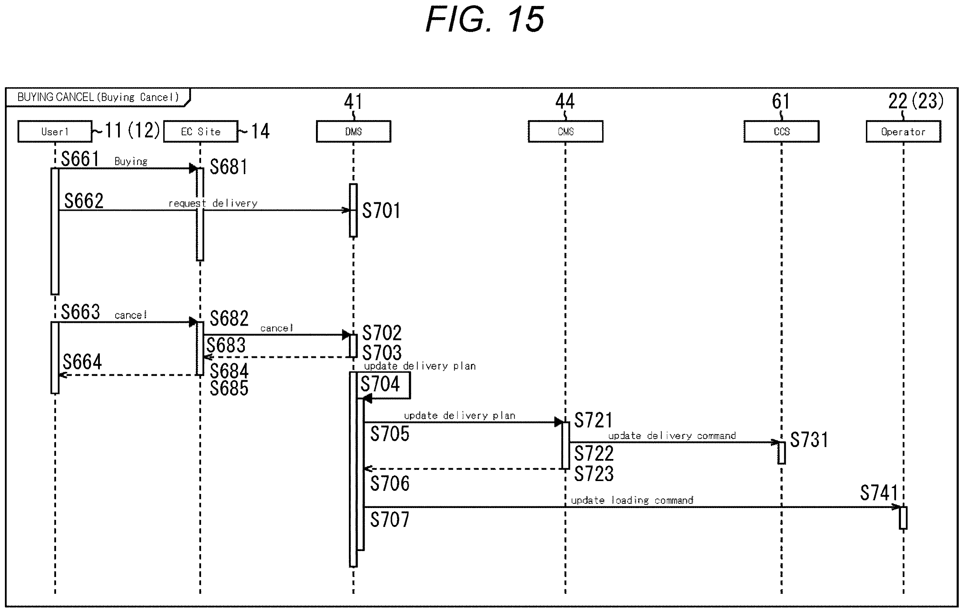

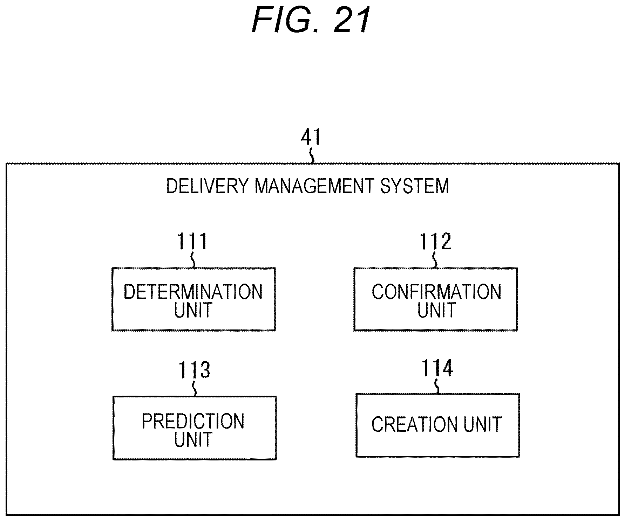

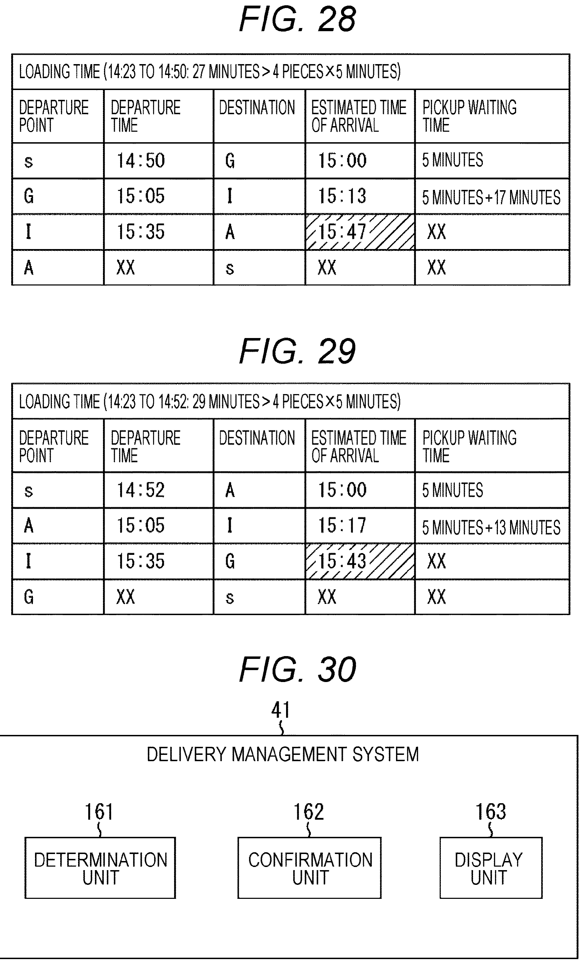

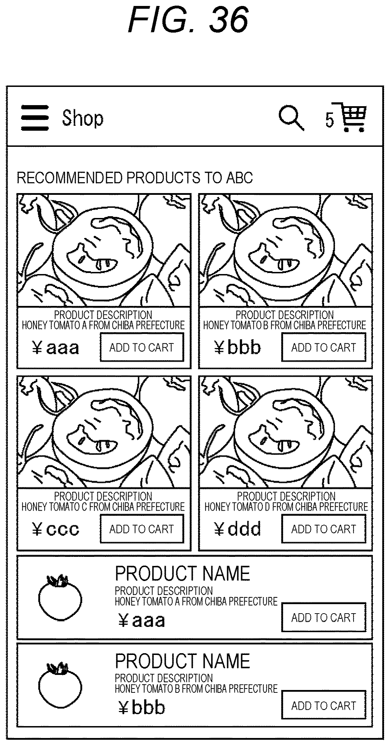

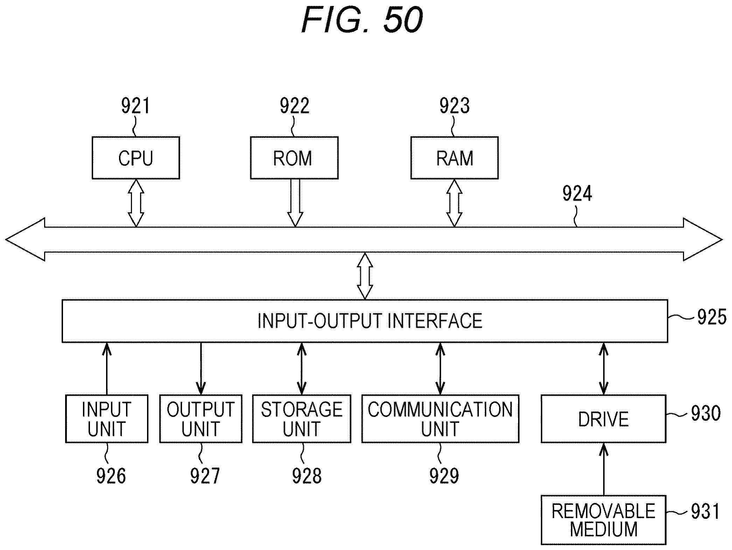

An embodiment for carrying out the present technology will be described below. Note that the description will be made in the following order.
1. Baggage order taking and delivery area (Fig. 1)
2. Overall configuration of baggage delivery system (Fig. 2)
3. Processing in normal scenario (Figs. 3 to 14)
   (1) Order placement processing (Figs. 3 to 9)
   (2) Delivery processing (Figs. 10 to 14)
4. Processing in irregular scenario (Figs. 15 to 20)
5. Delivery plan creation processing (Figs. 21 to 29)
6. Available time zone search processing (Figs. 30 to 35)
7. User interface (Figs. 36 to 49)
8. Modification
9. Computer (Fig. 50)
10. Other

### <Baggage order taking and delivery area (Fig. 1)>

Fig. 1 is a diagram for describing a baggage order taking and delivery area. As shown in the diagram, there are many buildings in an area 1, and residents of the area 1 enter and exit from an entrance of each building. According to the present technology, if a buyer buys a product 25 at a buying site 14 of a predetermined store 3, a cart 27 serving as a moving body accommodates the product 25 as baggage in a box 28 (both will be described later with reference to Fig. 2) and delivers the product 25.

The cart 27 sequentially goes around points 4 near the entrance of the building where the buyer lives. When the cart 27 reaches the nearby point 4, the buyer takes out the baggage from the box 28. In the example of Fig. 1, the cart 27 travels along a route 2 that starts from an XYZ delivery entrance and goes around an A building entrance, a B building entrance, a C building entrance, a D building entrance, an F building entrance, a G building entrance, and an H building entrance, and then returns to the XYZ delivery entrance. The store 3 of the buying site 14 is a baggage shipper. Since the cart 27 goes around the points 4 near the buyer of the product, the route will differ if the building where the buyer lives differs. In other words, instead of the route 2 in Fig. 1, another route around the points 4 near the buyer of the product is set.

The cart 27 is an unmanned autonomous car, and traveling is managed by a server system 17 (described later with reference to Fig. 2). In a case of this example, the cart 27 travels along a traveling path within a predetermined section. As the traveling path, a traveling path having a predetermined width that allows the cart 27 to travel is used. Since the cart 27 moves on the traveling path, a destination is on the traveling path at a position closest to the entrance of the building where the buyer lives. A plurality of carts 27 brings baggage to a plurality of destinations.

### <Overall configuration of baggage delivery system (Fig. 2)>

Fig. 2 is a diagram showing a configuration of a baggage delivery system. In the baggage delivery system 10, each user accesses the buying site 14 by using a network device the user holds (terminal for buying products). In the example of Fig. 2, a user 12A accesses the buying site 14, which is an EC site, using a smartphone 11A held by the user 12A and buys the product 25, whereas a user 12B accesses the buying site 14 using a smartphone 11B held by the user 12B and buys the product 25. Note that although illustration is omitted, the access is made via various networks represented by the Internet. Access is also made between other devices in a similar manner. In a case where the users 12A and 12B buy the products and request home delivery, the cart 27 is loaded with baggage of the product 25 and travels from a delivery source 24 via a destination 13A of the user 12A and a destination 13B of the user 12B, then returns to the delivery source 24. The user 12A and the user 12B drop the delivered baggage from the cart 27 at the destination 13A and the destination 13B, respectively.

Furthermore, hereinafter, the smartphones 11A and 11B and the users 12A and 12B, in a case where there is no need to distinguish therebetween individually, are simply described as the smartphone 11 and the user 12. Other components are also described in a similar manner.

By using the smartphone 11, the user 12 accesses the buying site 14 and buys a desired product. At this time, the user 12 designates a desired delivery time, delivery location, or the like. The delivery location is the destination of the cart 27. For example, for the user 12A, the point 4 close to the entrance of the building where the user 12A lives is the destination 13A, and for the user 12B, the point 4 close to the entrance of the building where the user 12B lives is the destination 13B. The buying site 14 includes a database 15 that stores user information.

The buying site 14 notifies the server system 17 of the product, the delivery time, the delivery location, and the user information. The server system 17 serving as a delivery management device includes a delivery management system 41 and a cart management system 44. The delivery management system 41 includes a database 42 that stores the user information and a database 43 that stores a delivery plan. The cart management system 44 includes a database 45 that stores cart information and a database 46 that stores box information.

The server system 17 notifies each user 12 of a searched delivery route and estimated time of arrival. A delivery site 16 is connected to the server system 17, and each user 12 can access the delivery site 16 from the smartphone 11 of the user 12 and know a cart position and a cart state. Furthermore, an event notification is issued from the delivery site 16 to each smartphone 11 as necessary.

An administration site 18 is also connected to the server system 17. An administrator 20 of the server system 17 can access the server system 17 from a personal computer 19 of the administrator 20 via the administration site 18 and obtain necessary information or make various requests.

At a shipper 24, an operator 23 who performs a delivery operation to load the product 25 into the cart 27 in order to deliver the product 25 holds a tablet 22. An operator site 21 is connected to the server system 17, and various pieces of information, requests, or the like are exchanged between the operator 23 having the tablet 22 and the server system 17 via the operator site 21.

The operator site 21 notifies the tablet 22 of the product 25, the cart information, the box information, the delivery time, or the like. On the basis of this notification, the operator 23 selects the predetermined product 25 from the product 25 held at the shipper 24, accommodates the product 25 in a predetermined package 26, and further loads the package 26 as baggage into the predetermined box 28 of the predetermined cart 27. At the shipper 24, the cart 27 is charged or undergoes maintenance.

On the cart 27, a predetermined number of (for example, six) boxes 28 are placed (only four of the boxes 28 are shown in Fig. 2). A sensor 29 is attached inside each box 28 to detect the presence of the package 26 in the box 28. An omnidirectional camera 30 is attached above the boxes 28 and captures an image around the cart 27.

A speaker 32 is attached to the front of the cart 27, and can emit a warning sound or the like to the surroundings as needed. A communication unit 31 attached to the cart 27 wirelessly communicates with the server system 17 directly or via various networks including the Internet.

The cart 27 includes a client system 51. The client system 51 includes a cart control system 61 and a box control system 62.

The cart 27 is notified of a destination and a delivery time zone from the server system 17, and the cart 27 travels to the designated destination and delivers the baggage in the designated delivery time zone. There is a plurality of (three in the example of Fig. 2) carts 27. In the example of Fig. 2, the cart 27A, one of the three carts 27, is being charged at the shipper 24, the cart 27B, another one, is being loaded with baggage, and the cart 27C, the other one, is delivering baggage.

Although Fig. 2 shows only one buying site 14, there is actually a plurality of buying sites (product distributors), and the server system 17 receives requests for product delivery from the plurality of buying sites 14, and delivers the products by using the cart 27.

The delivery management system 41 of the server system 17 is a system that manages baggage delivery, has overall functions related to delivery, and has the following characteristics.
- Manage the delivery plan and individual delivery (delivery from one destination to the next destination).
- Cooperate with the cart management system 44 and give delivery order.
- Only know that individual delivery has started and ended.
- The cart management system 44 manages the states of the cart 27 and the box 28.
- Notify the user 12 (smartphone 11), the administrator 20 (personal computer 19), and the operator 23 (tablet 22) of the status and request related to the delivery.
- Receive the delivery request from an external site (buying site 14).
- Perform no direct communication with the cart 27 (the cart management system 44 performs communication).

Functional requirements of the delivery management system 41 are as follows.
- Buying site 14 side
   Receive the delivery request, and generate and update the delivery plan.
   Predict delivery time.
   End the delivery plan at predetermined timing (time, resource, or the like).
- Delivery site 16 side (user side)
   Notify various pieces of information (cart departure, cart arrival, abnormal system, delivery time, pickup reminder, pickup completion).
   Update the estimated delivery time on the basis of the delivery status.
- Cart management system 44 side
   Check the cart resource and box state.
   Notify the delivery plan and individual delivery.
   Receive the start and completion of the individual delivery.
   Receive completion (return) of the delivery plan.
   Receive abnormality.
   Detect abnormality.
- Administration site 18 side
   Update the status (individual delivery state).
   Notify various pieces of information (cart departure, cart arrival, abnormal system, pickup completion).
- Operator site 21 side
   Create a loading order.
   Notify a loading order.
   Reply to box loading completion.
   Check cart loading completion.

The cart management system 44 is a system that manages the cart state, has overall functions related to the cart 27, and performs the following processing.
- Manage the state of the cart 27.
- Give an order such as destinations to the cart 27.
- Receive the state from the cart 27.
- Return the state of the cart 27 to the delivery management system 41.
- Cooperate with the cart control system 61 to complete the individual delivery and delivery plan.
- Manage the state of the box 28.
- Notify the user 12 (smartphone 11) and the administrator 20 (personal computer 19) of the status of the cart 27 and the box 28 and a request.
- Communicate directly with the cart 27.

Functional requirements of the cart management system 44 are as follows.
- Delivery site 16 side (user side)
   Update the status (cart position).
- Delivery management system 41 side
   Return the state of the cart resource and the box 28.
   Receive the delivery plan and the individual delivery.
   Notify the start and completion of the individual delivery.
   Check completion of the delivery plan (return).
   Detect abnormality.
   Notify abnormality.
- Cart 27 side
   Notify the stop of the cart 27.
   Notify an individual delivery order.
   Receive the cart state and surrounding status.
- Administration site 18 side
   Update the status (cart position, cart state).
   Notify various pieces of information (abnormal system).
   Receive a stop command and notify the cart 27.

The cart 27 is a moving body that moves autonomously and carries baggage to a destination, and is always in an online state. The cart 27 interacts with each other and moves autonomously so as to avoid collision. A small amount of path deviation is corrected within the cart 27. The cart 27 can move even in stormy weather such as rainy weather.

The cart control system 61 of the client system 51 is a system that controls the cart 27 and is on the cart 27. The cart control system 61 has overall functions related to cart control and performs the following processing.
- Cooperate with the cart management system 44 and complete individual delivery.
- Run the cart 27
   Stop and start, avoid obstacles, get over steps, stop for safety, or the like.
   Upload the surrounding status (still images, videos).
- Communicate directly with the cart management system 44.

Functional requirements of the cart control system 61 are as follows.
- Cart management system 44 side
   Receive cart stop.
   Receive individual delivery.
   Update the cart state and the surrounding status.
- Box control system 62 side
   Receive lock completion.
   Receive transfer completion.

The box control system 62 is a system that controls a box group and is on the cart 27. The box control system 62 has overall functions related to box control, and performs the following processing.
- Cooperate with the cart control system 61 and complete individual delivery.
   Update the box state.
   Notify the cart control system 44 side of the transfer completion.
- Receive a request to update key information of the box 28 from the cart management system 44.
- Manage baggage transfer (offline).
   Open and close a lock.
   Open (do not close) a door.
   Check opening and closing of the lock.
   Check opening and closing of the door.
   Check the presence of baggage.
- Communicate directly with the cart management system 44.

Functional requirements of the box control system 62 are as follows.
- Cart management system 44 side
   Update the box state.
   Update the key of the box 28.
- Cart control system 61 side
   Notify locking completion.
   Notify transfer completion.

The box 28 is one of several spaces in the cart 27 and accommodates the package 26. The box 28 has a door and a lock. The box 28 shows that the package 26 has been taken out. As the key of the box 28, Felica (trademark) can be used. In this case, a Felica ID of the user is transmitted to the delivery management system 41 at predetermined timing, and converted into the key that opens the door of the box 28. In a case where other user information is used as key information, the delivery management system 41 generates the key used by the user 12 to take out baggage from the box 28 on the basis of the user information. The key of the box 28 is rewritten by the box control system 62 to a key of a buyer of (person who picks up) the baggage within the box 28 (product 25).

Note that the cart management system 44 requests the box control system 62 to update the key of the box 28 at predetermined timing. On receipt of the key update processing request from the cart management system 44, the box control system 62 performs update box keys processing. In other words, the key of the box 28 is updated to the ordered key.

The product 25 bought by the user 12 is accommodated in the package 26 for each delivery unit and delivered as baggage. The package 26 is formed in a box shape using corrugated cardboard, but may be formed of a plastic bag or the like.

Note that in the present specification, the event is a phenomenon that occurs when a status largely changes, for example, when the cart 27 departs, loading is completed, or the like.

### <Processing in normal scenario>

### Order placement processing (Figs. 3 to 9)

Next, processing in a normal scenario (order placement processing and delivery processing) in which the user 12 buys the product 25 and baggage of the product 25 is delivered by the cart 27 will be described. Fig. 3 is a diagram for describing order placement processing in a normal scenario. As shown in Fig. 3, in the order placement processing, product buying processing is performed in step S1. The user 12 accesses the buying site 14, selects the product to buy, and requests delivery thereof. Payment by, for example, credit card, electronic money, or the like is made here. Of course, payment such as bank transfer may be made.

In step S2, the server system 17 performs delivery plan creation processing. With this processing, a delivery plan along a route optimized for efficiently delivering baggage of the bought product 25 to each user 12 is created.

In step S3, the server system 17 performs delivery order processing. The server system 17 requests the operator 23 (tablet 22) to make a product delivery based on the created delivery plan.

In step S4, the operator 23 performs loading processing. In other words, processing of putting the ordered product 25 into the package 26 and accommodating the package 26 as baggage in the ordered box 28 and locking the door of the box 28 is performed.

Details of each processing of step S1 to step S4 will be further described below.

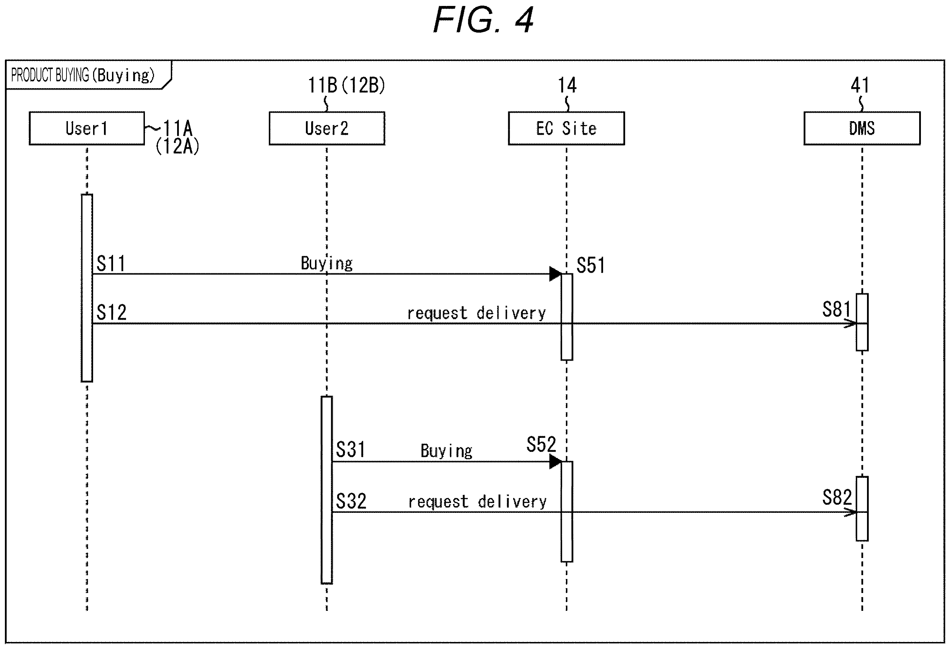

Fig. 4 is a flowchart for describing the product buying processing. With reference to Fig. 4, details of the product buying processing in step S1 of Fig. 3 will be further described.

In step S11, the user 12A operates the smartphone 11A to buy the product. In step S11, the smartphone 11A performs buying processing. In other words, the user 12A designates the product 25 to buy and designates a desired delivery period. Payment procedures are also performed here.

The buying site 14 receives a buying procedure from the smartphone 11A in step S51.

In step S12, the smartphone 11A performs request delivery processing on the delivery management system 41. That is, delivery of the product 25 is requested. The distribution management system 41 receives this delivery request in step S81.

The user 12A can select a desired delivery time zone in 30 minutes, for example, from 9:00 to 9:30, from 9:30 to 10:00, or from 10:00 to 10:30. Of course, the desired delivery time zone can be set differently, such as in 5 minutes or 10 minutes, for example.

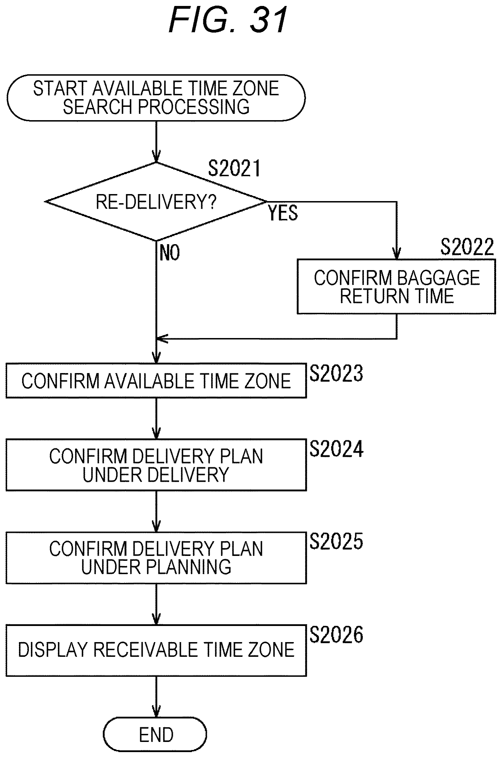

Processing of searching for the delivery time zone desired by the user 12A, in other words, searching for an available time zone will be described later with reference to Fig. 31.

Processing between the smartphone 11A of the user 12A, and the buying site 14 and the delivery management system 41 has been described above. Similar processing is performed between the smartphone 11B of the user 12B, and the buying site 14 and the delivery management system 41. The processing is described as the processing of step S31, step S32, step S52, and step S82 of Fig. 4. The processing is similar to the processing of the smartphone 11A of the user 12A described above, and thus descriptions thereof will be omitted. In this way, the delivery management system 41 is requested from a plurality of users 12 to deliver baggage of a plurality of products 25.

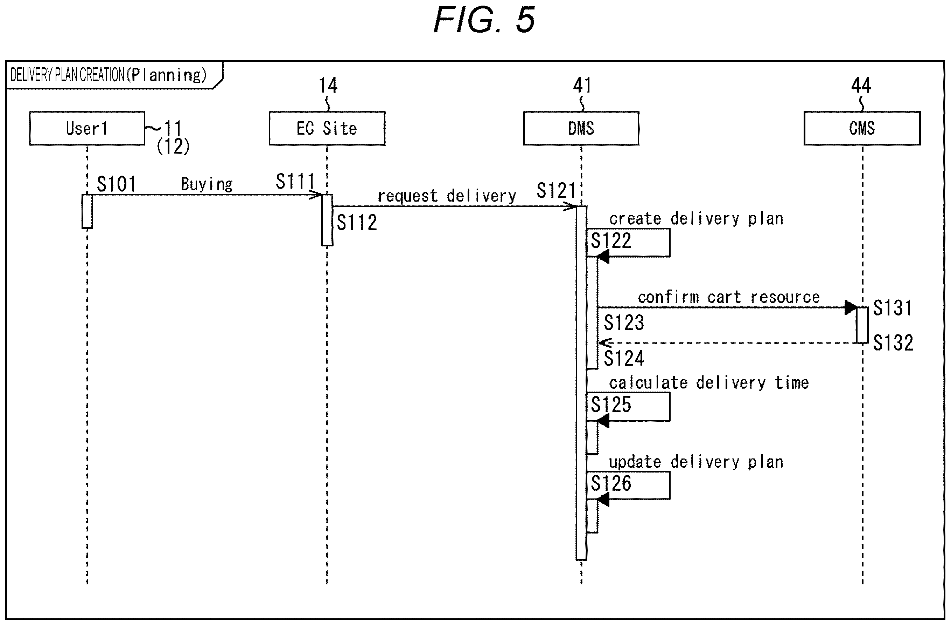

Fig. 5 is a flowchart for describing the delivery plan creation processing. With reference to Fig. 5, details of the delivery plan creation processing in step S2 of Fig. 3 will be further described.

In step S101, the user 12 (smartphone 11) performs buying processing on the buying site 14. The buying site 14 receives this processing in step S111 and performs request delivery processing in step S112. The distribution management system 41 receives this request delivery processing in step S121. The above processing is the product buying processing of Fig. 4 described above.

In step S122, the delivery management system 41 performs create delivery plan processing. In other words, the delivery management system 41 generates/updates the delivery plan. In step S123, the delivery management system 41 performs confirm cart resource processing on the cart management system 44. In step S131, the cart management system 44 receives the confirm cart resource processing. In step S132, the cart management system 44 returns a response to the delivery management system 41. In step S124, the delivery management system 41 receives the response. That is, the resource of the cart 27 necessary for the delivery is confirmed.

In step S125, the delivery management system 41 performs calculate delivery time processing. In other words, the delivery time zone is calculated from a departure point and a destination of individual delivery (delivery command). The individual delivery refers to delivery from the predetermined point 4 (departure point) to the next point 4 (destination). In step S126, the delivery management system 41 performs update delivery plan processing. In other words, the delivery plan is updated. Thereafter, the delivery management system 41 waits until timing for creating the delivery plan.

In creating the delivery plan, for example, a baggage loading time can be set at 5 minutes, a baggage pickup time by the user 12 can be set at 5 minutes, and time out of the baggage pickup time can be set at 15 minutes. The delivery management system 41 notifies the user 12 of estimated time of arrival of the individual delivery.

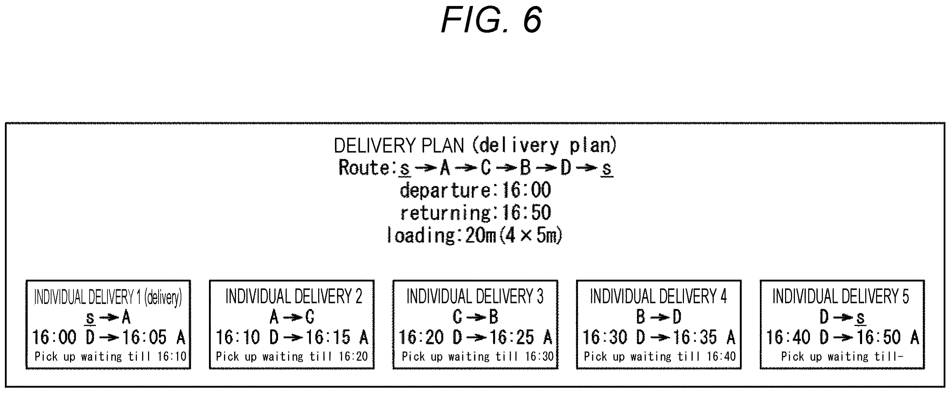

Fig. 6 is a diagram for describing the delivery plan. In the example of Fig. 6, the delivery plan along a route from a delivery starting point s via a destination A, a destination C, a destination B, and a destination D, and returning to the starting point s is created. A departure time from the starting point s is 16:00, and a returning time is 16:50. In this example, assuming that it takes 5 minutes to load single-piece baggage, the loading time of four-piece baggage is a total of 20 minutes (4 × 5 minutes). Furthermore, time out of the baggage pickup time is 5 minutes.

The first individual delivery 1 is a delivery from the starting point s to the first destination A, the departure time D is 16:00, and the arrival time A is 16:05. Then, time out of the baggage pickup time is 5 minutes, and the cart 27 waits until time 16:10 to pick up baggage.

The next individual delivery 2 is a delivery from the first destination A to the next destination C, and the departure time D is 16:10 and the arrival time A is 16:15. Then, time out of the baggage pickup time is 5 minutes, and the cart 27 waits until time 16:20 to pick up baggage.

The third individual delivery 3 is a delivery from the second destination C to the third destination B, and the departure time D is 16:20 and the arrival time A is 16:25. Then, time out of the baggage pickup time is 5 minutes, and the cart 27 waits until time 16:30 to pick up baggage.

The fourth individual delivery 4 is a delivery from the third destination B to the fourth destination D, and the departure time D is 16:30 and the arrival time A is 16:35. Then, time out of the baggage pickup time is 5 minutes, and the cart 27 waits until time 16:40 to pick up baggage.

The final individual delivery 5 is a delivery from the fourth destination D to the starting point s, and the departure time D is 16:40 and the arrival time A is 16:50. Since all the baggage has been delivered, the time to pick up baggage is not described.

The following is considered in the delivery plan creation processing.
- Arrival time prediction
   Transportation data is collected and prediction is made. At that time, weather conditions, time zone, season, request source, baggage, or the like are considered.
- Routing (shortest routing)
   Since it is difficult to implement a real time solution, an approximate solution is required.
- Resource (cart) prediction, dynamic resource increase
   If the cart 27 is in operation, prediction of when the cart 27 will come back is always made, and then a plan is made.
   Whenever the cart 27 is added, calculation is always made again and the plan is made.
- Maximizing user demand
   The user 12 designates a time zone within a certain duration of time. Efforts are made such that the designated time zone of the user requesting transport is satisfied. Since all time zones are not necessarily satisfied, overall optimization is performed such that the time zone is as close to the desired time zone as possible.
   In a case where time is critical, such as baggage transport within an airport, when it is determined that the desired time zone cannot be satisfied as a result of calculation, the delivery may be refused. Conversely, it is possible to devise to incorporate critical items into the plan with priority.
- Dynamic plan
   Since it is unknown when the user 12 requests a delivery, the delivery management system 41 waits for a delivery request to the operator 23 as much as possible. In a case where the current desired time zone of the user 12 cannot be observed, the cart 27 may depart without waiting for a subsequent delivery request. Furthermore, in a case where there are more requests than can be loaded into the resource, the cart 27 departs without waiting for a subsequent delivery request.
   In a case where delivery cancel or a time/location change occurs from the user 12 on the way, the route is recalculated. Since baggage has already been loaded into the cart 27, routing is performed again there.
- Mixed loading and shuttle delivery
   In a case where there are few requests and the cart 27 makes one delivery and returns in time, the cart 27 may make a shuttle delivery without mixed loading.
- Demand prediction (baggage owner)
   From collected delivery data, it is predicted what kind of request is likely to occur when and where.
   Peaks can be calculated using prediction results, which is useful for resource, inventory control, and the like.
- Minimum resource calculation
   From a delivery range, statistical information including populations and households, and store capacity, the minimum resource that can manage the delivery (such as the number of carts) can be calculated.

Since peaks can be calculated, it is possible to determine resource allocation or the like, and make a plan for sending the surplus cart 27 or the like to maintenance, for example. The cart 27 can also be lent between bases, for example.

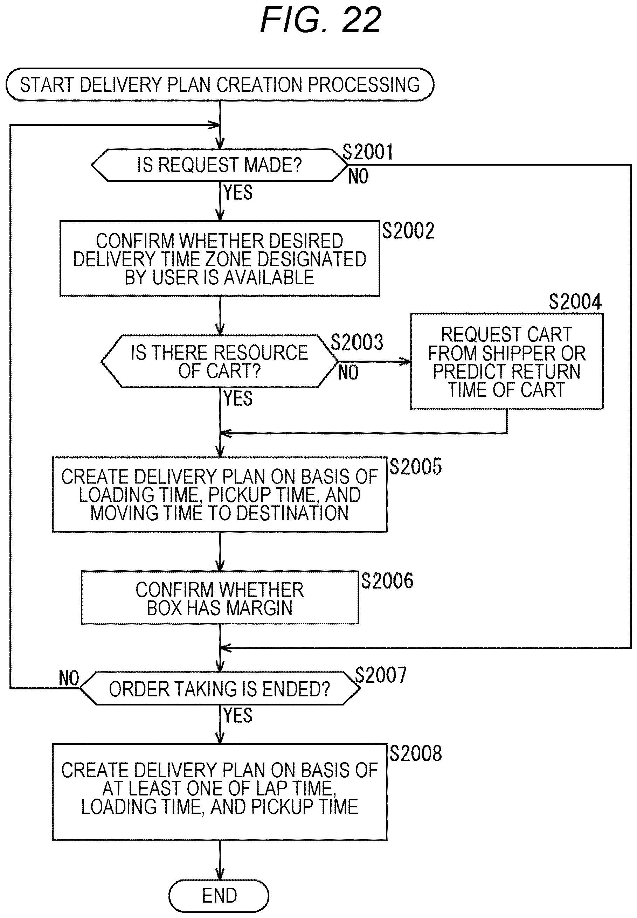

Note that a detailed example of the delivery plan creation processing will be described later with reference to Fig. 22.

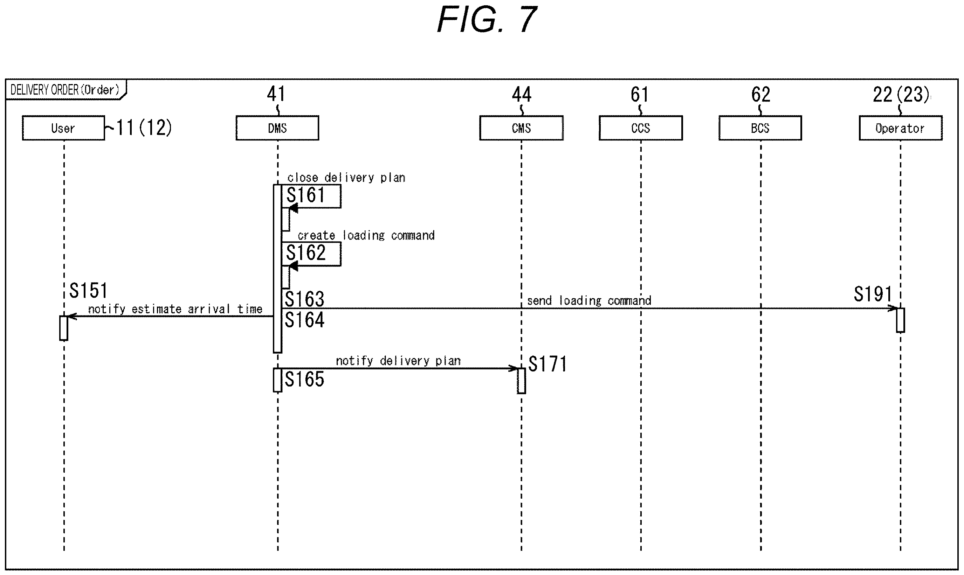

Fig. 7 is a flowchart for describing the delivery order processing. With reference to Fig. 7, details of the delivery order processing in step S3 of Fig. 3 will be further described.

In step S161, the delivery management system 41 performs close delivery plan processing. In other words, reception for creating the delivery plan is closed, and the delivery plan is finally fixed.

In step S162, the delivery management system 41 performs create loading command processing. In other words, on the basis of the created delivery plan, a loading order (loading command) of each individual delivery to the operator 23 is generated. In step S163, the delivery management system 41 performs send loading command processing. In other words, the tablet 22 of the operator 23 is notified of the loading order. This notification is received by the operator 23 (tablet 22) in step S191.

In step S164, the delivery management system 41 performs notify estimate arrival time processing. In other words, the user 12 (smartphone 11) is notified of the estimated time of arrival of baggage. In step S151, the user 12 (smartphone 11) receives this notification.

In step S165, the delivery management system 41 performs notify delivery plan processing on the cart management system 44. In other words, the delivery management system 41 notifies the cart management system 44 of the delivery plan. In step S171, the cart management system 44 receives this notification.

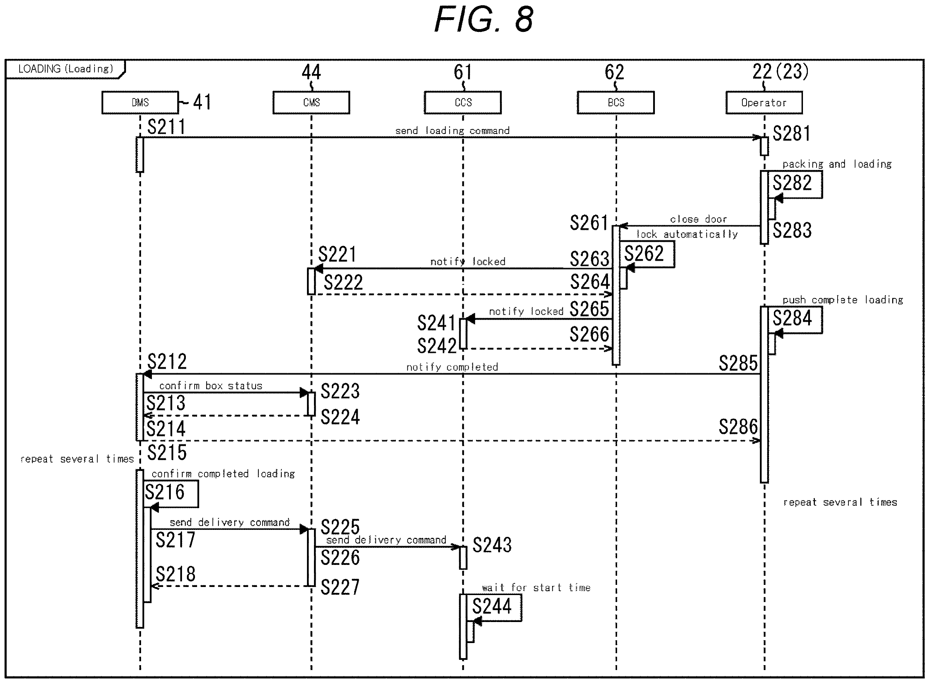

Fig. 8 is a flowchart for describing loading processing. With reference to Fig. 8, details of the loading processing in step S4 of Fig. 3 will be further described.

In step S211, the delivery management system 41 performs send loading command processing on the operator 23 (tablet 22). In other words, baggage loading into the cart 27 is requested. If the operator 23 (tablet 22) receives this request in step S281, the operator 23 performs packing and loading processing in step S282. In other words, the operator 23 performs an operation to accommodate the designated product 25 in the package 26 on the basis of the loading order of each individual delivery notified to the tablet 23 and to load the package 26 into the designated box 28 as baggage.

The loading order describes information about which user 12's package 26 is to be put into which cart 27 and which box 28 by when. According to the loading order in the tablet 22, the operator 23 packs the product 25 into the package 26 as baggage, opens a door of the designated box 28 of the ordered cart 27, loads and confirms the baggage, and then closes the door.

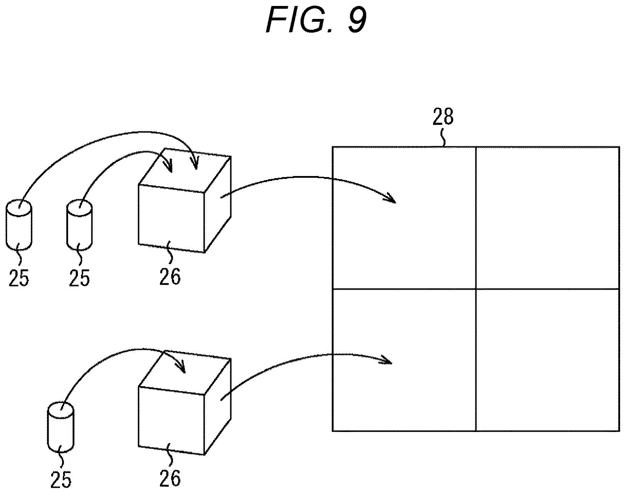

Fig. 9 is a diagram for describing loading baggage. As the package 26, the package 26 having a predetermined size suitable for the size of the product 25 is selected. In a case where there is a plurality of products 25, in a case where the option specification by the user 12 is "collective delivery", all the (2 in the example of Fig. 9) products 25 are accommodated into one package 26, and in a case where the option specification is "separate delivery", each product 25 is accommodated in the separate package 26. Then, the package 26 in which the product 25 is accommodated is loaded into the box 28 as baggage. Only one package 26 is loaded into one box 28. In a case where one user 12 has a plurality of packages 26, a plurality of boxes 28 will be assigned.

When the operator 23 closes the door of the box 28 in which the package 26 is loaded, the operator 23 operates the tablet 22 and inputs that the door has been closed. At this time, in step S283, the tablet 22 performs close door processing. In other words, the box control system 62 is notified that the door has been closed. On receipt of this notification in step S261, the box control system 62 performs lock automatically processing in step S262. In other words, if the door is closed, the box control system 62 automatically locks the door.

In step S263, the box control system 62 performs notify locked processing on the cart management system 44. In other words, the cart management system 44 is notified that the door has been locked. On receipt of this notification in step S221, the cart management system 44 returns a response in step S222. This response is received by the box control system 62 in step S264.

Similarly, in step S265, the box control system 62 performs notify locked processing on the cart control system 61. In other words, the cart control system 61 is notified that the door has been locked. On receipt of this notification in step S241, the cart control system 61 returns a response in step S242. This response is received by the box control system 62 in step S266.

In step S284, the operator 23 performs push complete loading processing. Specifically, the operator 23 operates "completed" on the tablet 22 and inputs that the operation has been completed. In step S285, the tablet 22 performs notify completed processing. In other words, the delivery management system 41 is notified that the operation has been completed. The delivery management system 41 receives this notification in step S212.

In step S213, the delivery management system 41 performs confirm box status processing. In other words, the delivery management system 41 compares the cart and box states at the cart management system 44 for confirmation. On receipt of this confirmation request in step S223, the cart management system 44 performs confirmation processing and returns a confirmation result response in step S224. In step S214, the delivery management system 41 receives this response. Then, in step S215, the delivery management system 41 returns a response corresponding to the notify completed output from the tablet 22 in step S285 to the tablet 22 of the operator 23.

The above processing is repeated several times. In other words, the operator 23 repeats similar operations until there is no order any more.

In step S216, the delivery management system 41 performs confirm completed loading processing. In other words, the delivery management system 41 confirms the loading status of each box 28 of the cart 27 and confirms that loading has been completed. In step S217, the delivery management system 41 performs send delivery command processing. In other words, the delivery management system 41 requests the cart management system 44 for individual delivery order. On receipt of this request in step S225, the cart management system 44 performs send delivery command processing on the cart control system 61 in step S226. This send delivery command processing is received by the cart control system 61 in step S243. That is, delivery from the current position to the next destination is ordered from the delivery management system 41 to the cart control system 61 via the cart management system 44.

In step S227, the cart control system 44 returns a response to the delivery management system 41, and the response is received by the delivery management system 41 in step S218.

The cart control system 61 performs wait for start time processing in step S244. In other words, the cart control system 61 waits until the departure time. The departure time is described in the send delivery command processing received in step S243.

### <Processing in normal scenario>

### Delivery processing (Figs. 10 to 14)

Next, out of the processing in a normal scenario (order placement processing and delivery processing) in which the user 12 buys the product 25 and the product 25 is delivered by the cart 27 as baggage, the delivery processing will be described with reference to Fig. 10. Fig. 10 is a diagram for describing the delivery processing in a normal scenario.

In step S301, departure processing is performed. In other words, in a case where the loading processing in step S4 of the order placement processing in Fig. 3 described above is completed, the cart 27 departs toward the destination at the departure time.

In step S302, moving and arrival processing is performed. In other words, the cart 27 having departed moves toward the destination and stops on arrival at the destination.

In step S303, pickup processing is performed. In other words, if the cart 27 arrives at the destination, the user 12 is notified of the arrival, and the user 12 takes out the package 26 from the box 28.

In step S304, return processing is performed. In other words, if the delivery to all destinations is completed, the cart 27 returns to the first starting point.

Details of each processing from step S301 to step S304 will be further described below.

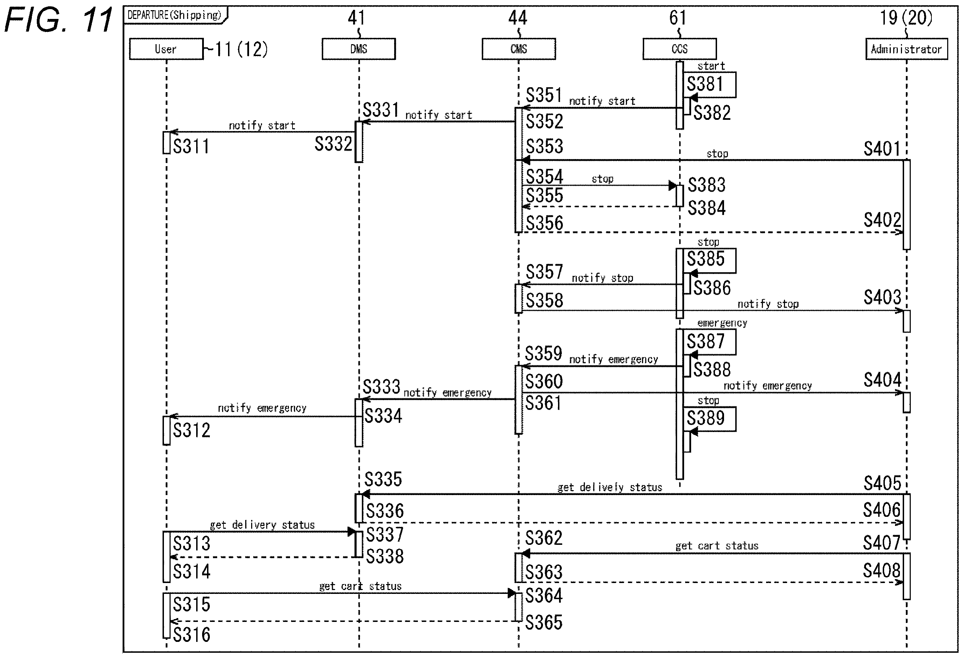

Fig. 11 is a flowchart for describing departure processing. With reference to Fig. 11, details of the departure processing in step S301 of Fig. 10 will be further described.

In step S381, the cart control system 61 performs start processing. In other words, at the departure time, the cart control system 61 autonomously departs the shipper and moves toward the destination. The departure time is described in the delivery command received from the cart management system 44 in step S243 of Fig. 8.

In step S382, the cart control system 61 performs notify start processing. In other words, the cart management system 44 is notified of the departure. This notification is received by the cart management system 44 in step S351.

Similarly, in step S352, the cart management system 44 performs notify start processing. In other words, the delivery management system 41 is notified of the departure. This notification is received by the delivery management system 41 in step S331.

Furthermore, in step S332, the cart management system 44 performs notify start processing. In other words, the user 12 (smartphone 11) is notified of delivery start. This notification is received by the user 12 (smartphone 11) in step S311.

The cart 27 travels so as to avoid collision with people, things, or the like. The cart 27 has a function therefor. The cart 27 travels at 6 km/h while confirming safety on a sidewalk and avoiding obstacles. The cart 27 streams 360-degree images captured by the camera 30 to the administrator 20 (personal computer 19) for administration, or keeps sending still images at regular intervals. Locking of the cart 27 can be manually switched to allow manual moving (moving by pressing).

The cart 27 appropriately issues an alert (outward sound) from the speaker 32 depending on the status. The alert is issued, for example, when it is dangerous, when the cart 27 turns, stops, starts moving, when an abnormal situation occurs (for example, when the cart 27 gets stuck), or the like.

In step S401, the administrator 20 (personal computer 19) performs stop processing. In other words, the cart management system 44 is notified of a stop command. On receipt of this notification in step S353, the cart management system 44 performs stop processing on the cart control system 61 in step S354. In other words, the cart control system 61 is notified of the stop command.

On receipt of this command in step S383, the cart control system 61 returns a response to the cart management system 44 in step S384. This response is received by the cart management system 44 in step S355. The cart management system 44 returns a response to the administrator 20 (personal computer 19) in step S356. This response is received by the administrator 20 (personal computer 19) in step S402.

In step S385, the cart control system 61 performs stop processing. In other words, the cart 27 is stopped. In step S386, the cart control system 61 performs notify stop processing. In other words, the cart management system 44 is notified that the cart 27 has stopped. On receipt of this notification in step S357, the cart management system 44 performs notify stop processing in step S358. In other words, the administrator 20 (personal computer 19) is notified that the cart 27 has stopped. This notification is received by the administrator 20 (personal computer 19) in step S403.

Note that the above stop processing is performed in order to test whether the cart 27 actually stops.

Furthermore, the cart control system 61 performs emergency processing in step S387. In other words, if an abnormality (emergency) such as the cart 27 being stuck due to an obstacle or the like is detected, an abnormality alert is generated from the speaker 32. Then, the cart control system 61 performs notify emergency processing in step S388. In other words, the cart control system 61 notifies the cart management system 44 of the abnormality, and performs stop processing in step S389. In other words, the traveling of the cart 27 is stopped.

On receipt of the notification of abnormality in step S359, the cart management system 44 performs notify emergency processing in step S360. In other words, the administrator 20 (personal computer 19) is notified of the abnormality. This notification is received by the administrator 20 (personal computer 19) in step S404.

Furthermore, the cart management system 44 performs notify emergency processing in step S361. In other words, the delivery management system 41 is notified of the abnormality. This notification is received by the delivery management system 41 in step S333. The delivery management system 41 performs notify emergency (not everything) processing in step S334. In other words, the user 12 (smartphone 11) is notified of the abnormality. This notification is received by the user 12 (smartphone 11) in step S312. The notification to the user 12 (smartphone 11) is performed only when an abnormal situation related to the user 12 occurs.

In such a case, the administrator 20 (personal computer 19) performs get delivery status processing in step S405 in order to determine the delivery status. In other words, the delivery management system 41 is requested to acquire the delivery status. The delivery management system 41 that has received this request in step S335 returns a response indicating the latest delivery status to the administrator 20 (personal computer 19) in step S336. This response is received by the administrator 20 (personal computer 19) in step S406.

Furthermore, the user 12 (smartphone 11) also performs get delivery status processing in step S313 in order to determine the delivery status. In other words, the delivery management system 41 is requested to acquire the delivery status. On receipt of this request in step S337, the delivery management system 41 returns a response indicating the latest delivery status in step S338. This response is received by the user 12 (smartphone 11) in step S314.

Moreover, in a case where the administrator 20 (personal computer 19) determines the status of the cart 27, the administrator 20 performs get cart status processing in step S407. In other words, the cart management system 44 is requested to acquire the status of the cart 27. On receipt of this request in step S362, the cart management system 44 returns a response indicating the latest status of the cart 27 to the administrator 20 (personal computer 19) in step S363. This response is received by the administrator 20 (personal computer 19) in step S408.

Furthermore, in a case where the user 12 (smartphone 11) also determines the status of the cart 27, the user 12 performs get cart status processing in step S315. In other words, the cart management system 44 is requested to acquire the status of the cart 27. On receipt of this request in step S364, the cart management system 44 returns a response indicating the latest status of the cart 27 in step S365. This response is received by the user 12 (smartphone 11) in step S316.

Note that although illustration is omitted, the cart 27 having stopped starts traveling again when a return command is issued from the cart management system 44.

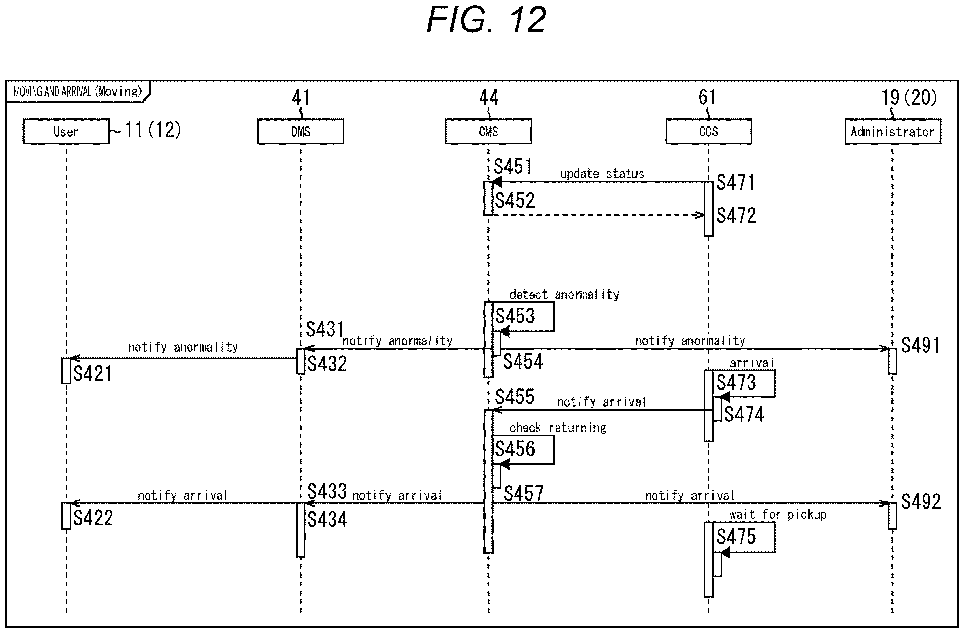

Fig. 12 is a flowchart for describing moving and arrival processing. With reference to Fig. 12, details of the moving and arrival processing in step S302 of Fig. 10 will be further described.

In step S471, the cart control system 61 performs update status processing. In other words, the cart control system 61 requests the cart management system 44 to update the status. On receipt of this request in step S451, the cart management system 44 returns a response in step S452. In step S472, the cart control system 61 receives this response. In other words, the status of the cart 27 is transmitted to the cart management system 44 together with a still image captured by the camera 30.

The processing of steps S471 and S472 of the cart control system 61 and the processing of steps S451 and S452 of the cart management system 44 are repeated. In this way, the cart control system 61 updates the status (still image) to the cart management system 44 as needed (for example, once every 5 seconds or the like) even while moving.

In a case where status notification fails several times, the cart control system 61 issues an abnormality alert and stops the cart 27.

In step S453, the cart management system 44 performs detect anormality processing. Then, in a case where an abnormality (unusual situation) is detected, the cart management system 44 performs notify anormality processing on the administrator 20 (personal computer 19) in step S454. In other words, the administrator 20 (personal computer 19) is notified of the occurrence of abnormality. Furthermore, the cart management system 44 performs notify anormality processing on the delivery management system 41. In other words, the delivery management system 41 is notified of the occurrence of abnormality.

On receipt of this notification in step S431, the delivery management system 41 performs notify anormality processing on the user 12 (smartphone 11) in step S432. In other words, the user 12 (smartphone 11) is notified of the occurrence of abnormality. This notification is received by the user 12 (smartphone 11) in step S421.

In step S473, the cart control system 61 performs arrival processing. In other words, on detection of arrival at the destination, the cart control system 61 performs notify arrival processing in step S474. In other words, the cart management system 44 is notified of the arrival. On receipt of the notification in step S455, the cart management system 44 performs check returning processing in step S456. In other words, it is confirmed whether the cart 27 has returned to the shipper 24, which is the starting point. In this case, the cart 27 has not returned yet.

In step S457, the cart management system 44 performs notify arrival processing. In other words, the administrator 20 (personal computer 19) and the delivery management system 41 are notified of the arrival. The administrator 20 (personal computer 19) receives this notification in step S492. On receipt of this notification in step S433, the delivery management system 41 performs notify arrival processing on the user 12 (smartphone 11) in step S434. In other words, the user 12 (smartphone 11) is notified of the arrival. This will prompt pickup of baggage.

This notification is received by the user 12 (smartphone 11) in step S422.

The cart control system 61 performs wait for pickup processing in step S475. In other words, since the user 12 having received the notification of arrival in step S422 comes to pick up the baggage, the cart 27 waits until the ordered time. The waiting time (departure time) is described in the delivery command received in step S243 of Fig. 8.

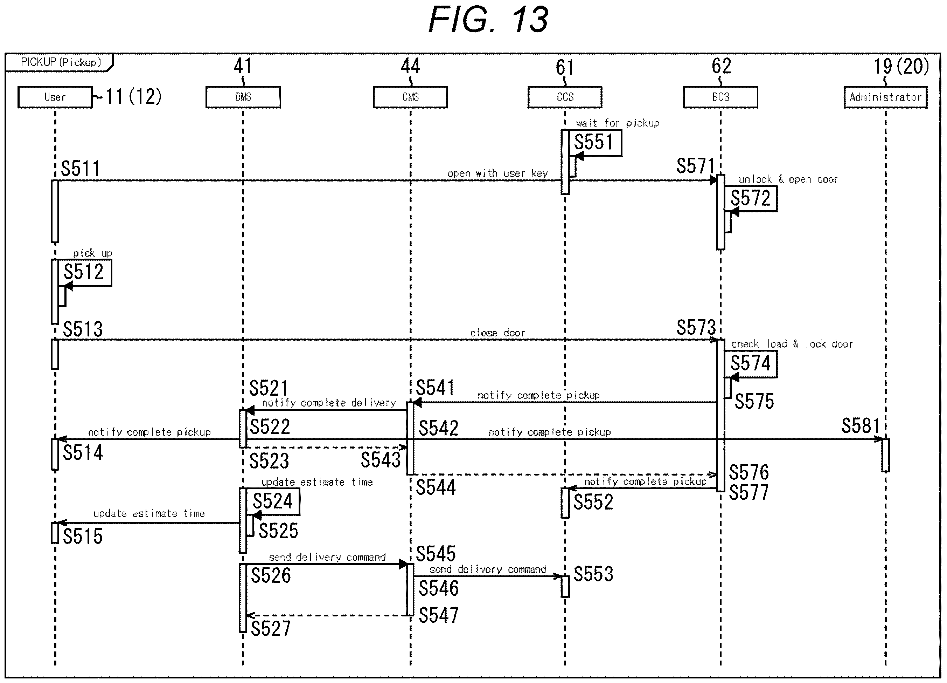

Fig. 13 is a flowchart for describing pickup processing. With reference to Fig. 13, details of the pickup processing in step S303 of Fig. 10 will be further described.

In step S551, the cart control system 61 performs wait for pickup processing. In other words, since the user 12 having received the arrival notification in step S422 of Fig. 12 comes to pick up the baggage, the cart 27 waits until ordered time. This processing has already been described as the processing in step S475 of Fig. 12.

In step S511, the user 12 (smartphone 11) performs open with user key processing. In other words, the user 12 approaches the cart 27 and holds the smartphone 11 over the box 28 of the number of which the notification is received. The smartphone 11 has stored the distributed key, and the key is transmitted to the box control system 62 via the box 28 by near field communication.

On receipt of this key in step S571, the box control system 62 performs unlock and open door processing in step S572. In other words, in a case where the received key matches the key stored in correspondence with the box 28, the door of the box 28 is unlocked and opened.

The user 12 performs pickup processing in step S512 and performs close door processing in step S513. In other words, the user 12 takes out the package 26 from inside the box 28 and closes the door. This completes the transfer.

On detection of closure of the door in step S573, the box control system 62 performs check load & lock door processing in step S574. In other words, the sensor 29 attached to the box 28 detects the package 26 in the box 28 and detects whether the package 26 has been taken out. In a case where the package 26 remains in the box 28, the lock is not closed. When the door is left open, an alert is generated from the speaker 32 to prompt the door to be closed. When the package 26 is taken out and the door is closed, the door is locked.

When the pickup is completed, in step S575, the box control system 62 performs notify complete pickup processing. In other words, the cart management system 44 is notified of the completion of pickup. On receipt of this notification in step S541, the cart management system 44 performs notify complete delivery processing in step S542. In other words, the delivery management system 41 is notified of the completion of delivery.

On receipt of this notification in step S521, the delivery management system 41 performs notify complete pickup processing in step S522. In other words, the administrator 20 (personal computer 19) and the user 12 (smartphone 11) are notified of the completion of pickup. This notification is received by each of the administrator 20 (personal computer 19) in step S581 and the user 12 (smartphone 11) in step S514.

In step S523, the delivery management system 41 returns a response to the cart management system 44. On receipt of this response in step S543, the cart management system 44 returns a response to the box control system 62 in step S544.

On receipt of this response in step S576, the box control system 62 performs notify complete pickup processing in step S577. In other words, the cart control system 61 is notified of the completion of pickup. This notification is received by the cart control system 61 in step S552.

The delivery management system 41 performs update estimate time processing in step S524. In other words, on the basis of the time when the package 26 is actually picked up, the delivery time zone of subsequent individual delivery is updated. Then, in step S525, the delivery management system 41 performs update estimate time processing. In other words, on the basis of the updated delivery time zone, the user 12 (smartphone 11) of the next individual delivery is notified of the estimated time of arrival. The user 12 (smartphone 11) receives this notification in step S515.

In step S526, the delivery management system 41 performs send delivery command processing. In other words, the cart management system 44 is requested to perform the next individual delivery. On receipt of this request in step S545, the cart management system 44 performs send delivery command processing in step S546. In other words, the cart control system 61 is requested to perform the next individual delivery. The cart control system 61 receives this request for individual delivery in step S553.

In step S547, the cart management system 44 returns a response to the delivery management system 41. The delivery management system 41 receives this response in step S527.

Thereafter, the processing returns to the departure processing of Fig. 11. Then, the next individual delivery is performed. As described above, individual deliveries are performed sequentially along the route.

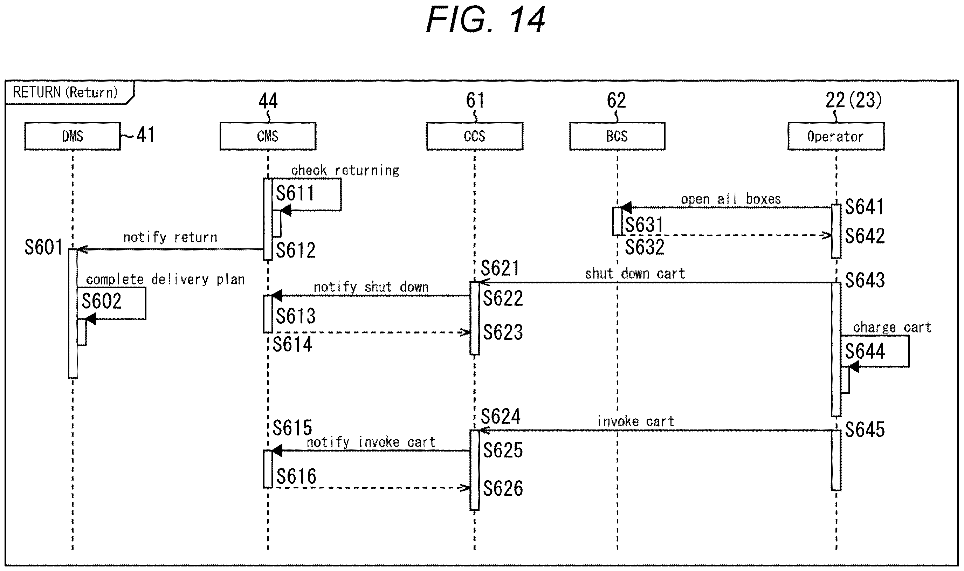

Fig. 14 is a flowchart for describing return processing. With reference to Fig. 14, details of the return processing in step S304 of Fig. 10 will be further described.

In step S611, the cart management system 44 performs check returning processing. In other words, the cart management system 44 confirms the arrival point and confirms whether the cart 27 has returned to the starting point (the cart 27 in which baggage is loaded has returned to the shipper 24). In a case where the cart 27 has returned, the cart management system 44 performs notify return processing in step S612. In other words, the cart management system 44 notifies the delivery management system 41 of the return of the cart 27. In step S602, the delivery management system 41 performs complete delivery plan processing. In other words, the delivery management system 41 completes the delivery plan.

In step S641, the operator 23 (tablet 22) performs open all boxes processing on the box control system 62. In other words, the operator 23 can open the doors of all the boxes 28 with a master key. On receipt of the master key in step S631, the box control system 62 unlocks all the doors. In step S632, the box control system 62 returns a response to the operator 23 (tablet 22). The operator 23 (tablet 22) receives this response in step S642.

In step S643, the operator 23 (tablet 22) performs shut down cart processing. In other words, the operator 23 presses a shutdown button. After shutting down the cart 27 in step S621, the cart control system 61 performs notify shutdown processing in step S622. In other words, the cart control system 61 notifies the cart management system 44 of the shutdown. On receipt of this notification in step S613, the cart management system 44 returns a response to the cart control system 61 in step S614. This response is received by the cart control system 61 in step S623.

In step S644, the operator 23 performs charge cart processing. In other words, the cart 27 is charged. If the cart 27 is shut down, the operator 23 can push the cart 27 by hand.

In step S645, the operator 23 (tablet 22) performs invoke cart processing. In other words, the operator 23 confirms the completion of charging and presses an invoking button. If the cart control system 61 invokes the cart in step S624, the cart control system 61 performs notify invoke cart processing in step S625. In other words, the cart control system 61 notifies the cart management system 44 of the invoking. On receipt of this notification in step S615, the cart management system 44 returns a response to the cart control system 61 in step S616. The cart control system 61 receives this response in step S626.

The above processing is repeated, and the cart 27 moves along the route of the delivery plan created each time, and sequentially delivers the baggage to the destinations.

### <Processing in irregular scenario (Figs. 15 to 20)>

The processing described above with reference to Figs. 3 to 14 is the processing in a normal scenario. Hereinafter, processing in an irregular scenario that is not the normal scenario will be described with reference to Figs. 15 to 20.

As the processing in an irregular scenario, processing in a case where buying is canceled will be described with reference to Fig. 15. Fig. 15 is a flowchart for describing buying cancel processing. The user 12 (smartphone 11) can cancel the buying itself from a page of the buying site 14.

First, processing of steps S661 and S662 of the user 12 (smartphone 11), step S681 of the buying site 14, and step S701 of the delivery management system 41 are performed. In other words, buying processing and request delivery processing are performed. This processing is the same buying processing as the processing of steps S11 and S12 of the user 12 (smartphone 11), step S51 of the buying site 14, and step S81 of the delivery management system 41 in Fig. 4 described above.

In step S663, the user 12 (smartphone 11) performs cancel processing. In other words, the user 12 (smartphone 11) requests the buying site 14 to cancel the buying. On receipt of this request in step S682, the buying site 14 performs cancel processing in step S683. In other words, the delivery management system 41 is notified of the buying cancel.

On receipt of this notification in step S702, the delivery management system 41 returns a response in step S703. On receipt of this response in step S684, the buying site 14 returns a response to the user 12 (smartphone 11) in step S685. This response is received by the user 12 (smartphone 11) in step S664.

In step S704, the delivery management system 41 performs update delivery plan processing. In other words, the delivery management system 41 updates the delivery plan. In step S705, the delivery management system 41 performs update delivery plan processing. In other words, the delivery management system 41 notifies the cart management system 44 of the updated delivery plan.

On receipt of this notification in step S721, the cart management system 44 performs update delivery command processing in step S722. In other words, the cart management system 44 notifies the cart control system 61 of the individual delivery order. The cart control system 61 receives this notification in step S731. In step S723, the cart management system 44 returns a response. The delivery management system 41 receives this response in step S706.

In step S707, the delivery management system 41 performs update loading command processing on the operator 23 (tablet 22). In other words, the delivery management system 41 notifies the operator 23 of canceling the loading order. The operator 23 (tablet 22) receives this notification in step S741.

In a case where the user 12 cancels buying in advance after the delivery plan is fixed, before going for delivery, the individual delivery is canceled, and the cart 27 does not stop at the canceled destination and goes to the next destination. In a case where the cart 27 has headed for delivery, the cart 27 can go to the destination first and then go to the next destination without waiting for pickup. Alternatively, the cart 27 can change the destination to a new destination on the spot and go directly to the new destination from the spot.

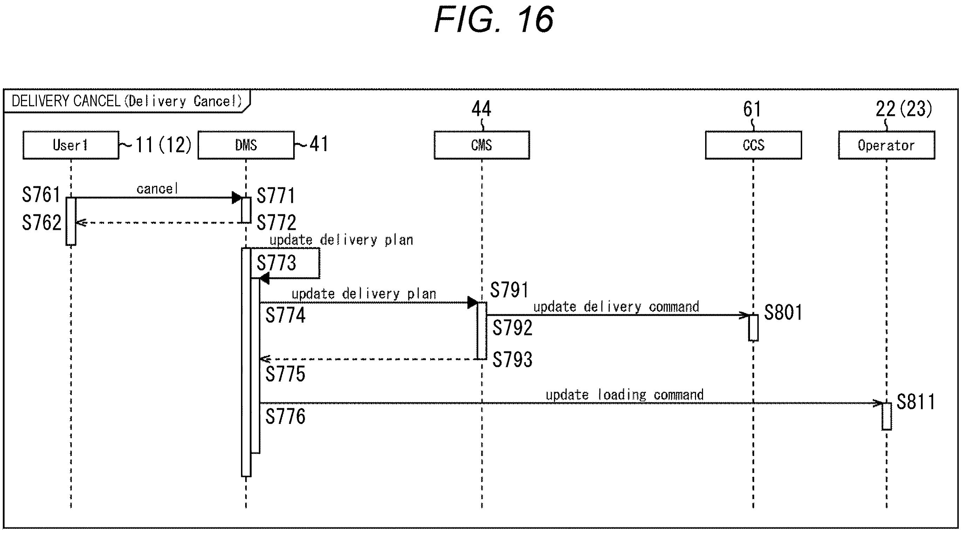

Next, as the processing in an irregular scenario, processing in a case where delivery is canceled will be described with reference to Fig. 16. Fig. 16 is a flowchart for describing delivery cancel processing. The user 12 (smartphone 11) cancels the delivery from the delivery site 14, and inputs a re-delivery time zone.

In step S761, the user 12 (smartphone 11) performs cancel processing. In other words, the delivery management system 41 is notified of the delivery cancel and the re-delivery time zone. On receipt of this notification in step S771, the delivery management system 41 returns a response to the user 12 (smartphone 11) in step S772. The user 12 (smartphone 11) receives this response in step S762.

In step S773, the delivery management system 41 performs update delivery plan processing. In other words, the delivery plan is updated to take into account the re-delivery time zone. In step S774, the delivery management system 41 performs update delivery plan processing. In other words, the cart management system 44 is notified of the updated delivery plan. On receipt of the notification in step S791, the cart management system 44 performs update delivery command processing in step S792. In other words, the cart control system 61 is ordered to update the delivery order as necessary. The cart control system 61 receives this order in step S801. The cart management system 44 returns a response in step S793. The delivery management system 41 receives this response in step S775.

In step S776, the delivery management system 41 performs update loading command processing. In other words, the operator 23 (tablet 22) is ordered to perform loading, and in step S811, the operator 23 (tablet 22) receives this order and performs loading.

Thereafter, the buying cancel processing in Fig. 15 is performed.

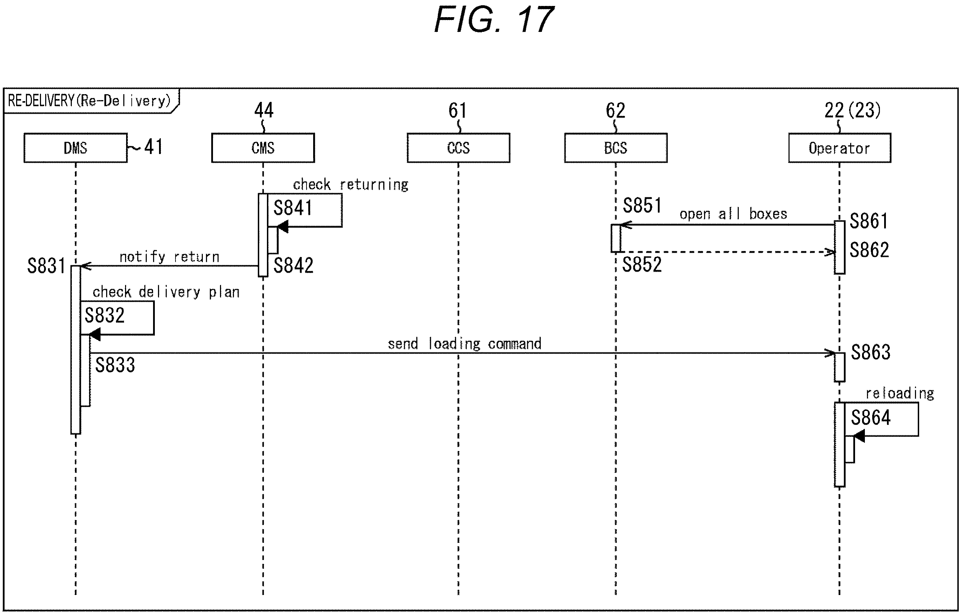

Next, as the processing in an irregular scenario, processing for re-delivery will be described with reference to Fig. 17. Fig. 17 is a flowchart for describing re-delivery processing. In a case where the delivery time zone is changed, the processing shown in Fig. 17 is performed.

In step S841, the cart management system 44 performs check returning processing. In other words, it is confirmed whether the cart 27 in which the baggage whose delivery time zone has been changed is loaded has returned. In a case where the cart 27 in which the baggage whose delivery time zone has been changed is loaded has not returned yet, processing is performed to wait until the cart 27 carrying the baggage returns. In a case where the cart 27 in which the baggage whose delivery time zone has been changed is loaded has already returned, the cart management system 44 performs notify return processing in step S842. In other words, the cart management system 44 notifies the delivery management system 41 of the return of the cart 27.

On receipt of the return notification in step S831, the delivery management system 41 performs check delivery plan processing in step S832. In other words, the delivery management system 41 checks the delivery plan, and creates the delivery plan such that the changed delivery time zone is satisfied.

In step S833, the delivery management system 41 performs send loading command processing. In other words, the delivery management system 41 requests the operator 23 (tablet 22) to perform loading based on the delivery plan. The operator 23 (tablet 22) receives this request in step S863.

The operator 23 (tablet 22) receives this request in step S863, but before that, the operator 23 performs open all boxes processing in step S861. In other words, the box control system 62 is ordered to open all the doors by using the master key. On receipt of this order in step S851, the box control system 62 unlocks and opens all the doors. The operator 23 takes out baggage for re-delivery from the box 28.

In step S852, the box control system 62 returns a response to the operator 23 (tablet 22). The operator 23 (tablet 22) receives this response in step S862.

Therefore, on receipt of the loading request from the delivery management system 41 in step S863, the operator 23 (tablet 22) performs reloading processing in step S864. In other words, the operator 23 (tablet 22) loads again the baggage taken out from the box 28 into the designated box 28 in accordance with the loading request received in step S863.

Thereafter, the loading processing of Fig. 8 described above is performed.

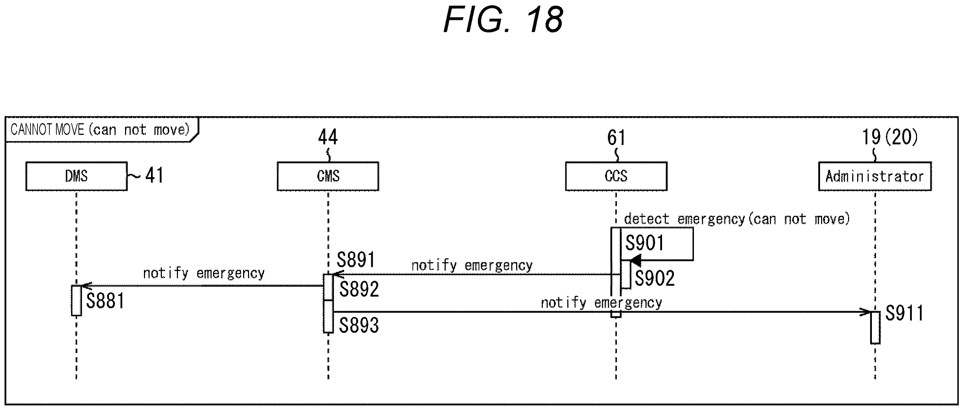

Next, as the processing in an irregular scenario, processing in a case where the cart cannot move will be described with reference to Fig. 18. Fig. 18 is a flowchart for describing the processing in a case where the cart cannot move.

In step S901, the cart control system 61 performs detect emergency (can not move) processing. In other words, it is detected that an abnormality (emergency) has occurred for some reason and the cart 27 cannot move. If the abnormality is detected, the cart control system 61 performs notify emergency processing on the cart management system 44 in step S902. In other words, the cart control system 61 notifies the cart management system 44 of the abnormality (cart 27 cannot move).

On receipt of this notification in step S891, the cart management system 44 performs notify emergency processing on the delivery management system 41 in step S892. In other words, the cart management system 44 notifies the delivery management system 41 of the abnormality. The delivery management system 41 receives this notification in step S881. Furthermore, in step S893, the cart management system 44 performs notify emergency processing on the administrator 20 (personal computer 19). In other words, the cart management system 44 notifies the administrator 20 (personal computer 19) of the abnormality (cart 27 cannot move). The administrator 20 (personal computer 19) receives this notification in step S911.

In a case where there is some obstacle and the cart 27 cannot go to the destination, the delivery can be canceled for a reason on a delivery contractor side. Alternatively, re-shipping can be made by updating map information. It should be known from a charging history that the battery is dead. In a case where the cart 27 is destroyed or stolen, it is possible to take measures such as notifying the police on the basis of images captured by the camera 30.

Note that conversely, in a case where the pickup ends early and the departure can be made earlier than an estimated time, it is possible to wait there until the estimated time, move to the next destination and wait there, slow down the moving speed, or the like. It is preferable to be able to confirm the cause of arrival earlier than estimated.

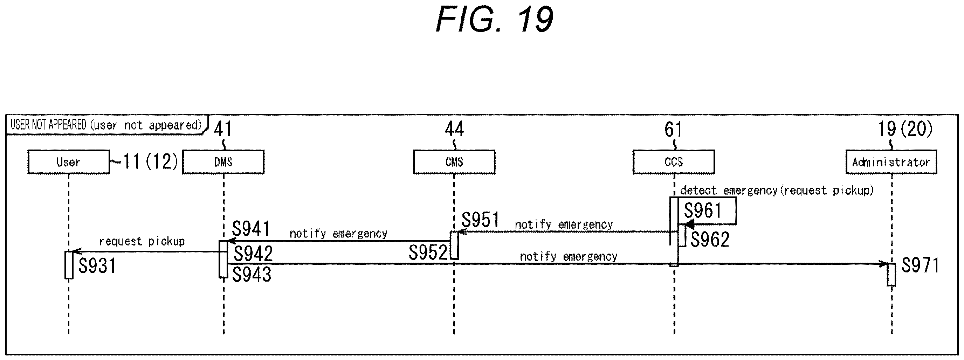

Next, as the processing in an irregular scenario, processing in a case where a customer does not appear will be described with reference to Fig. 19. Fig. 19 is a flowchart for describing processing in a case where a customer does not appear.

In step S961, the cart control system 61 performs detect emergency (request pickup) processing. In other words, the cart control system 61 detects that no pickup has been made for a certain period of time. At this time, measures such as emitting a sound from the speaker 32 of the cart 27 can be taken. Furthermore, at this time, the cart control system 61 performs notify emergency processing on the cart management system 44 in step S962. In other words, the cart control system 61 notifies the cart management system 44 of an abnormality.

On receipt of this notification (pickup request) in step S951, the cart management system 44 performs notify emergency processing on the delivery management system 41 in step S952. In other words, the cart management system 44 notifies the delivery management system 41 of the abnormality.

On receipt of this notification in step S941, the delivery management system 41 performs request pickup processing on the user 12 (smartphone 11) in step S942. In other words, the delivery management system 41 issues a notification prompting the user 12 (smartphone 11) to perform pickup. If the user 12 (smartphone 11) receives this notification in step S931, the user 12 goes to pick up baggage on the basis of the prompting notification.

In step S943, the delivery management system 41 performs notify emergency processing on the administrator 20 (personal computer 19). In other words, the delivery management system 41 notifies the administrator 20 (personal computer 19) of the abnormality. The administrator 20 (personal computer 19) receives this notification in step S971.

Unless the user 12 appears to pick up baggage, the estimated time of departure will be over, and thus the subsequent estimated time of arrival or the like will be recalculated. Then, the status confirmation status issued by the delivery management system 41 can be updated. In a case where the time gap is too large, it is possible to notify the buying site 14 in order to notify the user 12.

In a case where the user 12 cancels buying although the pickup is waited, or the user 12 changes the desired delivery time zone although the pickup is waited, the pickup time can be changed. When the pickup time is changed, time-out occurs, and moving to the next destination can be started. In this case, processing similar to processing in a case where time-out occurs at the original time is performed.

In a case of arrival later than expected, the user 12 (smartphone 11) is notified of the arrival, and the departure time can be recalculated. Furthermore, it is preferable that the reason why the expectation is delayed can be confirmed later.

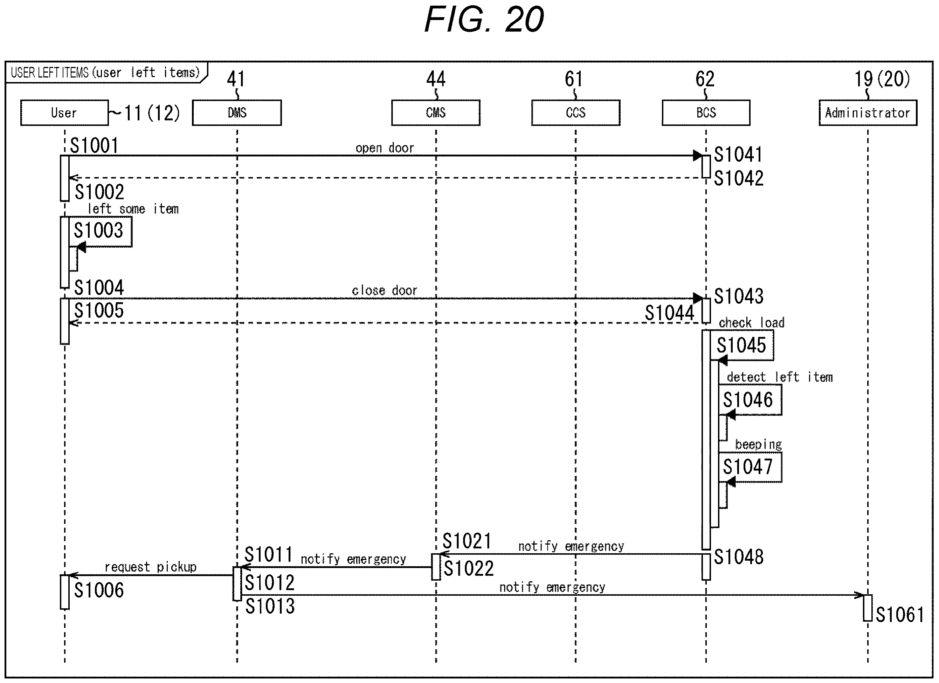

Next, as the processing in an irregular scenario, processing in a case where the user has left items will be described with reference to Fig. 20. Fig. 20 is a flowchart for describing processing in a case where the user has left items

In step S1001, the user 12 (smartphone 11) performs open door processing on the box control system 62. In other words, the user 12 operates the smartphone 11 to cause the box control system 62 to read the key. The box control system 62 reads this key in step S1041, and in a case where this matches the key stored in advance, the box control system 62 unlocks the box 28 and opens the door. The user 12 takes out the package 26 from the box 28. The box control system 62 returns a response to the user 12 (smartphone 11) in step S1042. The user 12 (smartphone 11) receives this response in step S1002.

In step S1003, the user 12 performs left some item processing. In other words, it is assumed that the user 12 leaves some item in the box 28 when taking out package. In step S1004, the user 12 performs close door processing. In other words, the user 12 closes the door.

In a case where the box control system 62 detects that the door is closed in step S1043, the box control system 62 returns a response to the user 12 (smartphone 11) in step S1044. The user 12 (smartphone 11) receives this response in step S1005.

In step S1045, the box control system 62 performs check load processing. In other words, the presence of baggage in the box 28 is detected. In step S1046, the box control system 62 performs detect left item processing. In other words, the sensor 29 detects whether some item is left in the box 28. In a case where it is detected that some item is left in the box 28, the box control system 62 performs beeping processing in step S1047. In other words, a beep sound is emitted from the speaker 32.

In step S1048, the box control system 62 performs notify emergency processing on the cart management system 44. In other words, the cart management system 44 is notified of an abnormality.

On receipt of the abnormality notification in step S1021, the cart management system 44 performs notify emergency processing on the delivery management system 41 in step S1022. In other words, the delivery management system 41 is notified of the abnormality.

On receipt of the abnormality notification from the cart management system 44 in step S1011, the delivery management system 41 performs request pickup processing on the user 12 (smartphone 11) in step S1012. In other words, a notification is issued to prompt the user 12 (smartphone 11) to perform pickup. In step S1006, the user 12 (smartphone 11) receives this notification.

Furthermore, in step S1013, the delivery management system 41 performs notify emergency processing on the administrator 20 (personal computer 19). In other words, the administrator 20 (personal computer 19) is notified of the abnormality. This notification is received by the administrator 20 (personal computer 19) in step S1061.

### <Delivery plan creation processing (Figs. 21 to 29)>

Next, out of the delivery plan creation processing described with reference to step S3 of Fig. 3 and the flowchart of Fig. 5, mainly the processing of the delivery management system 41 will be further described. In order to perform this processing, the delivery management system 41 has a functional configuration shown in Fig. 21.

Fig. 21 is a block diagram showing an exemplary configuration of the delivery management system. The delivery management system 41 includes a determination unit 111, a confirmation unit 112, a prediction unit 113, and a creation unit 114.

The determination unit 111 determines whether there is a request, timing of completion of order taking, or the like. The confirmation unit 112 confirms availability of the desired delivery time zone, a margin of the box, or the like. The prediction unit 113 predicts the return time of the cart 27 or the like. The creation unit 114 creates the delivery plan or the like.

Fig. 22 is a flowchart for describing the delivery plan creation processing.

In step S2001, the determination unit 111 determines whether a request is made. In other words, it is determined whether the user 12 (smartphone 11) requests a delivery of the bought product 25.

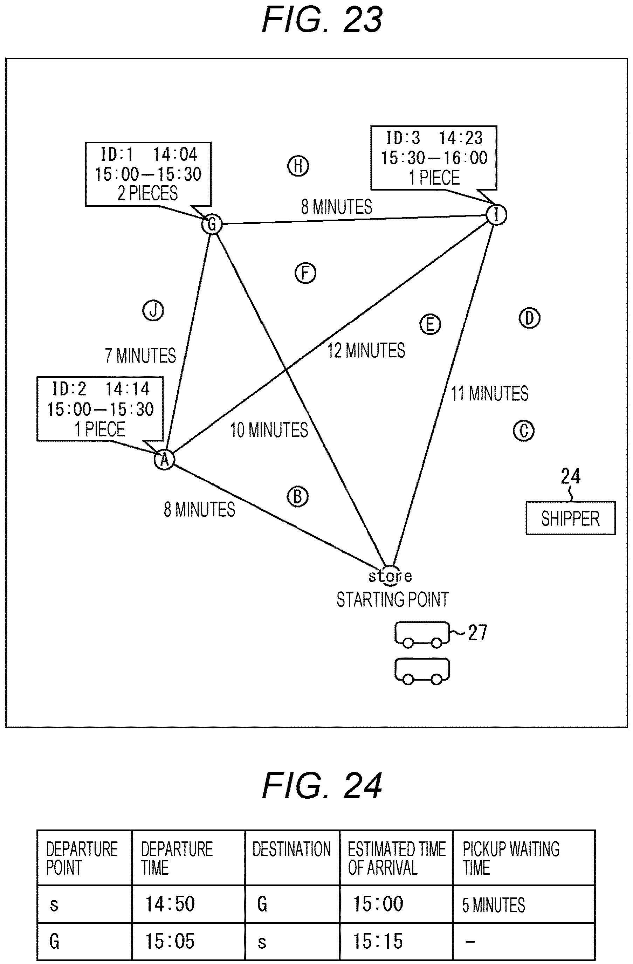

Now, it is assumed that a delivery request has been made as shown in Fig. 23, for example. Fig. 23 is a diagram for describing the delivery state. In this example, the following three delivery requests are made.
Delivery ID: 1
Order time 14:04
Desired delivery time zone 15: 00 - 15: 30
Delivery quantity: 2 pieces
Delivery destination: G
Delivery ID: 2
Order time 14:14
Desired delivery time zone 15: 00 - 15: 30
Delivery quantity: 1 piece
Delivery destination: A
Delivery ID: 3
Order time 14:23
Desired delivery time zone 15: 30 - 16: 00
Delivery quantity: 1 piece
Delivery destination: I

In the example of Fig. 23, the cart 27 departs from the delivery starting point s (denoted as a store in Fig. 23), and there are 10 delivery destinations A to J as the delivery destinations for delivering baggage (points 4). It is requested to deliver baggage to three of these delivery destinations (destinations) G, A, and I.

In a case where it is determined in step S2001 that a delivery request is made, the confirmation unit 112 confirms in step S2002 whether the desired delivery time zone designated by the user 12 is available.

The desired delivery time zone that can be designated by the user 12 is one time zone that is A minutes after the order time and has a width of W minutes. Since there is no baggage loading time immediately after the order, the desired delivery time zone is a time zone that is A minutes after the order time. From a standpoint of the user 12, it is preferable that a value of A is small. Setting the value of W at 0 is unrealistic because there is no time margin. If calculation can be done quickly, it is possible to prohibit selection of the time zone by displaying "filled" when the time zone is designated.

For example, it is assumed that A = 30 and W = 30. In this case, for example, if an order is placed at time 16:03, a time zone after 16:33, which is 30 minutes after 16:03, can be selected, and thus selection can be made from a time zone 17: 00 - 17: 30. If an order is placed at time 16:00, a time zone after 16:30, which is 30 minutes after 16:00, can be selected, and thus in this case as well, selection can be made from the time zone 17: 00 - 17: 30. The delivery is not a delivery to any arbitrary point, but a delivery to any one of the predetermined points 4.

For example, in a case where a delivery request of ID 1 is made, it is confirmed whether the desired delivery time zone 15: 00 - 15: 30 designated by the user 12 is available. The order time is 14:04, the moving time from the delivery starting point s to the destination G is 10 minutes, and if the baggage loading time is 5 minutes per piece, the baggage loading time will be 10 minutes for 2 pieces. Therefore, the departure time (delivery start time) is time 14:14, which is the loading time of 10 minutes after the order time 14:04, and the estimated time of arrival at the destination is 14:24, which is the moving time of 10 minutes after the departure time 14:14. Therefore, it is determined that the desired delivery time zone 15: 00 - 15: 30 is available. Of course, various pieces of information including map information necessary for confirming the destination, the route moving to the destination, the moving time required to move to the destination, or the like are stored in the database 43 in advance.

Note that details of the processing in step S2002 for confirming whether the desired delivery time zone is available (available time zone search processing) will be described later with reference to Figs. 30 to 35.

In step S2003, the determination unit 111 determines whether there is a resource of the cart 27. In a case where all the carts 27 are out and there is no available cart 27 now, the prediction unit 113 requests the cart 27 from the shipper 24 or predicts the return time of the cart 27 in step S2004. In other words, a cart 27 is newly added, or the return time of the cart 27 currently making a delivery (time when the cart 27 heading for a delivery returns to a return point) is predicted.

In a case where it is determined in step S2003 that there is an available cart 27, or in a case where a new cart 27 is added or the return time of the available cart 27 is predicted in step S2004, the processing proceeds to step S2005.

In step S2005, the creation unit 114 creates the delivery plan on the basis of the loading time, pickup time, and moving time to the destination. The loading time is a time required to accommodate the product 25 in the package 16 as baggage and load the package 16 in the box 28 of the cart 27. In other words, the loading time is not a time actually needed for loading, but is an expected loading time expected to be needed for loading while creating the delivery plan. The pickup time is a time that allows the user 12 to pick up the package 26 from the box 28. In other words, the pickup time is not a time actually needed for pickup, but is an expected pickup time expected to be needed for pickup while creating the delivery plan. The moving time to the destination is a time expected to be needed for the cart 27 to move from the starting point s to the destination G. A length of the moving time depends on where the destination is.

In the current case, for example, the delivery plan shown in Fig. 24 is created by the processing of step S2005. Fig. 24 is a diagram for describing a delivery plan. The departure time from the starting point s, which is the first departure point, is 14:50, and the moving time from the starting point s to the destination G is 10 minutes. Therefore, the estimated time of arrival at the destination G is 15:00.

Since the pickup time at the destination G is 5 minutes, the departure time from the destination G is 15:05, 5 minutes after the arrival time at the destination G 15:00. Then, since the moving time from the destination G to the starting point s is 10 minutes, the estimated time of arrival at the starting point s (return time) is 15:15.

Next, in step S2006, the confirmation unit 112 confirms whether the box 28 has a margin. Assuming that the number of boxes is 6, in this case, since the delivery quantity is 2, it is determined that the box 28 has a margin. In a case where all baggage cannot be accommodated in 6 boxes 28 (in a case where the boxes 28 are insufficient), it is necessary to increase the number of carts 27.

In step S2007, the determination unit 111 determines whether to end the order taking of delivery by the object cart 27 (whether to end reception). For example, in a case where all the boxes 28 are filled or it becomes difficult to make the already received delivery in the time zone desired by the user 12 on the basis of the order time, the order taking is ended.

In a case where the order taking is not ended yet, the processing returns to step S2001. In a case where it is determined in step S2001 that no request is made, the processing proceeds to step S2007, and in a case where it is determined there that order taking is not ended yet, the processing returns to step S2001.

In a case where a delivery request of ID 2 is made at the destination A at the order time 14:14, it is confirmed in step S2002 whether the desired delivery time zone 15:00 - 15:30 is available. It is assumed that simply the cart 27 moves to the destination A next to the destination G that has already been received. In this case, the moving time from the destination G to the destination A is 7 minutes, and as is apparent from Fig. 24, the departure time from the destination G is 15:05. Therefore, the estimated time of arrival at the destination A is 15:12, and it is determined that the desired delivery time zone 15: 00 - 15: 30 is available.

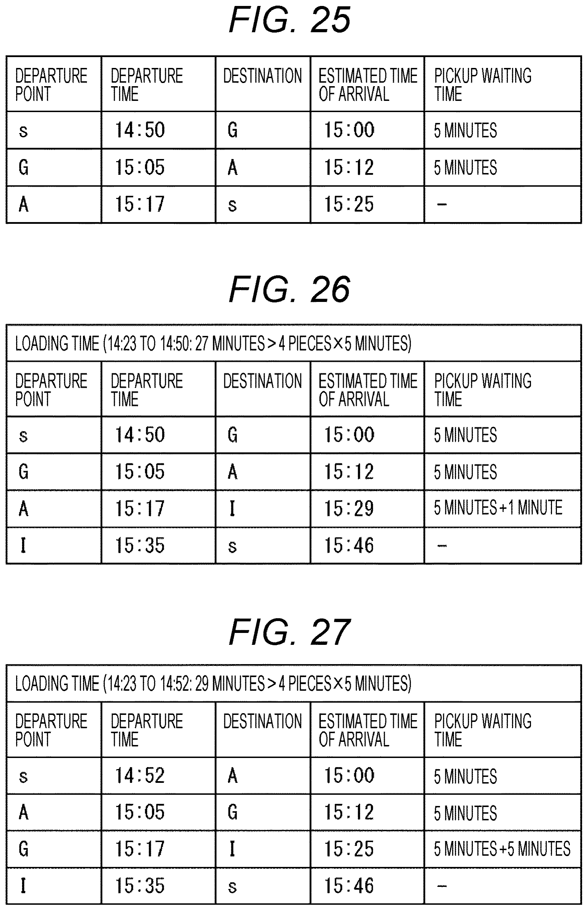

For example, a delivery plan shown in Fig. 25 is created by the processing of step S2005. Fig. 25 is a diagram for describing a delivery plan. A route to move to the destination A next to the destination G of the delivery plan of Fig. 24 and return to the starting point s is planned.

Since the moving time from the destination G to the destination A is 7 minutes, 15:12, which is 7 minutes after the departure time 15:05 from the destination G, becomes the estimated time of arrival at the destination A. Since the pickup time at the destination A is also 5 minutes, the departure time from the destination A is 15:17. Since the moving time from the destination A to the starting point s is 8 minutes, the estimated time of arrival at the starting point s (return time) is 15:25.

In a case where a delivery request of ID 3 is made at the destination I at the order time 14:23, it is confirmed in step S2002 whether the desired delivery time zone 15:30 - 16: 00 is available. It is assumed that simply the cart 27 moves to the destination I next to the destination G and the destination A that have already been received. In this case, the moving time from the destination A to the destination I is 12 minutes, and as is apparent from Fig. 25, the departure time from the destination A is 15:17. Therefore, the estimated time of arrival at the destination I is 15:29, and it is determined that the desired delivery time zone 15:30 - 16:00 is available.

For example, a delivery plan shown in Fig. 26 is created by the processing of step S2005. Fig. 26 is a diagram for describing a delivery plan. A route to move to the destination I next to the destination A of the delivery plan of Fig. 25 and return to the starting point s is planned.

Since the moving time from the destination A to the destination I is 12 minutes, 15:29, which is 12 minutes after the departure time from the destination A 15:17, becomes the estimated time of arrival at the destination I. The pickup time at the destination I is also 5 minutes, but the desired delivery time zone is 15:30 - 16:00, therefore it is necessary to wait for 1 minute from arrival to the start time 15:30 of the desired delivery time zone. Therefore, the pickup time at the destination I is 6 minutes (= 5 minutes + 1 minute), and the departure time from the destination I is 15:35. Since the moving time from the destination I to the starting point s is 11 minutes, the estimated time of arrival at the starting point s (return time) is 15:46.

In a case where it is determined in S2007 that reception is ended, in step S2008, the creation unit 114 creates the delivery plan on the basis of at least one of a lap time, the loading time, or the pickup time. In other words, a plurality of delivery plans is thereby compared, and from among the delivery plans, one delivery plan is selected and created.

The lap time used as a parameter for evaluating each delivery plan in a case where the delivery plan is created is a time needed to pass at least two of the loading point where baggage is loaded and the pickup point where baggage is picked up, and is information indicating usage time of the cart 27. Specifically, the lap time is a time needed for the cart 27 to travel from the delivery starting point s (loading point) via each destination (pickup point) finally to the return point (this may be the same location as or different location from the starting point s). Also, the lap time is a difference between the departure time from the starting point s and the estimated time of arrival at the return point (return time). With this information, a turnover rate of the cart 27 can be determined. As the lap time decreases, the turnover rate of the cart 27 improves and the delivery efficiency improves.

Furthermore, the loading time used as a parameter for evaluating the delivery plan here is a time obtained by adding a buffer time to the loading time corresponding to the number of baggage (for example, 5 minutes x 4 pieces = 20 minutes). The buffer time is a time indicating a margin for the time needed to load baggage (loading margin time regarding a baggage loading margin into the cart 27), and is a time from the order time of the first delivery request to the departure time from the starting point s. This makes it possible to determine the degree of load the loading operation imposes on the operator 23. As the capacity of the buffer of the loading time increases, the load imposed on the operator 23 decreases. With the value of the buffer capacity of the loading time, the load of the loading operation can be adjusted in a buffer-like manner.

Moreover, the pickup time used as a parameter for evaluating the delivery plan is a time obtained by adding the buffer time to the pickup time corresponding to the number of baggage (for example, 1 minute x 5 pieces = 5 minutes). The buffer time is an additional time available for baggage pickup (pickup margin time regarding a margin of baggage pickup waiting from the cart 27). In other words, this is a time available for baggage pickup before the estimated time of arrival, specifically, this is a time from the estimated time of arrival at the destination to the start time of the desired delivery time zone at that destination. This can give the user 12 a margin time for baggage pickup in a surprise manner. This makes it possible to adjust the pickup time in a buffer-like manner.

For example, in a case where a delivery request of ID 3 is made, the following delivery plans can be considered.
(1) As shown in Fig. 25, after the cart 27 moving along the route of starting point s - destination G - destination A - starting point s returns to the starting point s at 15:25, baggage of the delivery request of ID 3 can be loaded into the cart 27. Since the baggage is one-piece baggage, the loading time is 5 minutes, and the time 15:30 can be set as the departure time.
(2) As the delivery route, another route having order of destinations different from the route of starting point s - destination G - destination A - destination I - starting point s can be considered.
(3) A route of starting point s - destination I - starting point s using another cart 27 can be considered.

From a viewpoint of optimization of entire delivery, for example, the delivery plan of (2) described above along the route in different order of destinations is created (route in order different from the order of starting point s - destination G - destination A - destination I - starting point s).

For example, as shown in Fig. 27, a route in order of starting point s - destination A - destination G - destination I - starting point s can be considered. Fig. 27 is a diagram for describing a delivery plan.

In the example of Fig. 27, it is only necessary to arrive at the first destination A at the start time 15:00 of the desired delivery time zone 15:00 - 15:30. Therefore, since the moving time from the starting point s to the destination A is 8 minutes, the departure time from the starting point s is 14:52, which is 8 minutes before the start time 15:00 of the desired delivery time zone. Then, the estimated time of arrival at the destination A is 15:00. Since the pickup time is 5 minutes, the departure time from the destination A is 15:05.

Since the moving time from the destination A to the destination G is 7 minutes, the estimated time of arrival at the destination G is 15:12. Since the pickup time at the destination G is 5 minutes, the departure time from the destination G is 15:17, which is 5 minutes after the arrival time 15:12 at the destination G.

Since the moving time from the destination G to the destination I is 8 minutes, the time 15:25, which is 8 minutes after the departure time 15:17 from the destination G, becomes the estimated time of arrival at the destination I. The pickup time at the destination I is also 5 minutes, but the desired delivery time zone is 15:30 - 16:00, therefore it is necessary to wait for 5 minutes from arrival to the start time 15:30 of the desired delivery time zone. Therefore, the pickup time at the destination I is 10 minutes (= 5 minutes + 5 minutes), and the departure time from the destination I is 15:35. Since the moving time from the destination I to the starting point s is 11 minutes, the estimated time of arrival at the starting point s is 15:46.

Furthermore, as shown in Fig. 28, a route in order of starting point s - destination G - destination I - destination A - starting point s can be considered. Fig. 28 is a diagram for describing a delivery plan.

In the example of Fig. 28, it is only necessary to arrive at the first destination G at the start time 15:00 of the desired delivery time zone 15:00 - 15:30. Therefore, since the moving time from the starting point s to the destination G is 10 minutes, the departure time from the starting point s is 14:50, which is 10 minutes before the start time 15:00 of the desired delivery time zone. Then, the estimated time of arrival at the destination G is 15:00. Since the pickup time is 5 minutes, the departure time from the destination G is 15:05.

Since the moving time from the destination G to the destination I is 8 minutes, the estimated time of arrival at the destination I is 15:13. The pickup time at the destination I is 5 minutes, but the desired delivery time zone at the destination I is 15:30 - 16:00, therefore it is necessary to wait for 17 minutes from the estimated time of arrival 15:13 to the start time 15:30 of the desired delivery time zone. Therefore, the total waiting time is 22 minutes (= 5 minutes + 17 minutes). As a result, the departure time from the destination I is time 15:35, which is 22 minutes after the arrival time 15:13 at the destination I.

Since the moving time from the destination I to the destination A is 12 minutes, the time 15:47, which is 12 minutes after the departure time 15:35 from the destination I, becomes the estimated time of arrival at the destination A. However, since the desired delivery time zone at the destination A is 15:00 - 15:30, the estimated time of arrival will have passed the desired delivery time zone. Therefore, this route cannot be adopted.

Furthermore, as shown in Fig. 29, a route in order of starting point s - destination A - destination I - destination G - starting point s can be considered. Fig. 29 is a diagram for describing a delivery plan.

In the example of Fig. 29, it is only necessary to arrive at the first destination A at the start time 15:00 of the desired delivery time zone 15:00 - 15:30. Therefore, since the moving time from the starting point s to the destination A is 8 minutes, the departure time from the starting point s is 14:52, which is 8 minutes before the start time 15:00 of the desired delivery time zone. Then, the estimated time of arrival at the destination A is 15:00. Since the pickup time is 5 minutes, the departure time from the destination A is 15:05.

Since the moving time from the destination A to the destination I is 12 minutes, the estimated time of arrival at the destination I is 15:17. The pickup time at the destination I is 5 minutes, but the desired delivery time zone at the destination I is 15:30 - 16:00, therefore it is necessary to wait for 13 minutes from the estimated time of arrival 15:17 to the start time 15:30 of the desired delivery time zone. Therefore, the total waiting time is 18 minutes (= 5 minutes + 13 minutes). As a result, the departure time from the destination I is time 15:35, which is 18 minutes after the estimated time of arrival 15:17 at the destination I.

Since the moving time from the destination I to the destination G is 8 minutes, the time 15:43, which is 8 minutes after the departure time 15:35 from the destination I, becomes the estimated time of arrival at the destination G. However, since the desired delivery time zone at the destination G is 15:00 - 15:30, the estimated time of arrival will have passed the desired delivery time zone. Therefore, this route cannot be adopted.

For the route of starting point s - destination G - destination A - destination I - starting point s in Fig. 26, the order time of the delivery request of ID 3 is 14:23, and the departure time from the starting point s is 14:50. Therefore, the capacity of the loading time buffer is 27 minutes (= 14:50 - 14:23).

In contrast, for the route of starting point s - destination A - destination G - destination I - starting point s in Fig. 27, the order time of the delivery request of ID 3 is 14:23, and the departure time from the starting point s is 14:52. Therefore, the capacity of the loading time buffer is 29 minutes (= 14:52 - 14:23).

In this way, the buffer capacity of the loading time is larger in the case of the example of Fig. 27 (29 minutes) than in the case of the example of Fig. 26 (27 minutes). Since the buffer capacity of the loading time represents a time margin for loading, a larger value is preferable.

Furthermore, in the example of Fig. 26, the buffer capacity of the pickup time at the destination A is 1 minute, whereas in the example of Fig. 27, the buffer capacity of the pickup time at the destination G is 5 minutes. Since the buffer capacity of the pickup time represents a time margin for baggage pickup, a larger value is preferable. However, if the value is too large, the cart 27 stops for a longer time than necessary, which is useless.

For the route in Fig. 26, the departure time from the starting point s is 14:50, the return time is 15:46, and the lap time is 56 minutes (= 15: 46 - 14: 50). Meanwhile, for the route in Fig. 27, the departure time from the starting point s is 14:52, the return time is 15:46, and the lap time is 54 minutes (= 15: 46 - 14: 52).

Since the lap time is a time for causing the cart 27 to travel, a smaller value is preferable.

In view of the foregoing, the creation unit 114 can adopt and determine that the route shown in Fig. 27 is optimal among the routes shown in Figs. 26 to 29, and create the delivery plan.

Note that in the above description, all of the loading time, the pickup time, and the lap time have been considered, but it is not always necessary to consider all, and at least one can be considered. These factors can be weighted as needed. With this arrangement, optimized delivery can be implemented. Furthermore, delivery can be made efficiently.

After all, in the present embodiment, delivery is planned on the basis of the following parameters. In other words, the parameters include the desired delivery time zone, estimated time of arrival, order time, number of carts, loading time, pickup time, number of destinations, moving time to destinations, box capacity, lap time, buffer capacity of loading time, and buffer capacity of pickup time.

The delivery plan is created as described above. The loading order for the operator 23 (tablet 22) is performed after the delivery route for one cart 27 is determined. That is, the loading order is not performed every time a delivery request is made. With this configuration, the operation of moving the cart 27 wastefully or loading baggage again is inhibited.

The user 12 is notified of the availability of the desired delivery time zone after the route is fixed. If a method of gradual update is adopted, it is necessary to perform update many times, and it is not preferable that the available time zone is advanced or delayed each time. It is preferable that a notification such as "the delivery time has been determined" is made after the desired delivery time zone is received from the user 12.

Note that the number and weight of baggage can also be used as parameters for creating the delivery plan.

If an incident occurs after the delivery plan is created as described above, the delivery plan can be re-planned.

Incidents that occur include, as described above, no individual delivery (previous cancel), zero waiting time for the user 12 (post cancel), the user 12 does not appear (timeout), or the like.

The following are considered as re-planning patterns.
- Re-create all the delivery plan again.
   The calculation is performed again in the current state, but the resource, state of baggage, and time need to be confirmed securely.
- Leave the delivery plan as it is, set the waiting time for individual delivery at 0, and go next. The time is recalculated.
- Leave the delivery plan as it is, skip the individual delivery, and rewrite the starting point for the next individual delivery. The time is recalculated.
- Leave a sending plan as it is, and recalculate the individual delivery time.
- Make the delivery plan itself into an abnormal state (emergency).

It is set such that confirmation can be made how far the delivery plan has finished. The delivery plan is made into emergency, and the individual delivery that has not been completed is made into emergency.

### <Available time zone search processing (Figs. 30 to 35)>

Next, details of processing for confirming the availability of the desired delivery time zone described in step S2002 of Fig. 22 will be described as available time zone search processing with reference to Figs. 30 to 35.

In order to perform the available time zone search processing, the delivery management system 41 has a functional configuration shown in Fig. 30. Fig. 30 is a block diagram showing the exemplary configuration of the delivery management system.

The delivery management system 41 includes a determination unit 161, a confirmation unit 162, and a display unit 163.

The determination unit 161 determines whether the delivery is re-delivery, or the like. The confirmation unit 162 confirms the return time, the available time zone, or the like. The display unit 163 displays receivable time zones or the like.

Next, usage time zone search processing will be described with reference to Fig. 31. Fig. 31 is a flowchart for describing the usage time zone search processing.

In step S2021, the determination unit 161 determines whether the baggage delivery is re-delivery. In a case where the baggage delivery is re-delivery, the confirmation unit 162 confirms the baggage return time in step S2022. In other words, in a case where the baggage delivery is re-delivery, since the baggage has already been delivered, the return time at which the baggage returns to the starting point s is confirmed. This return time is an estimated time.

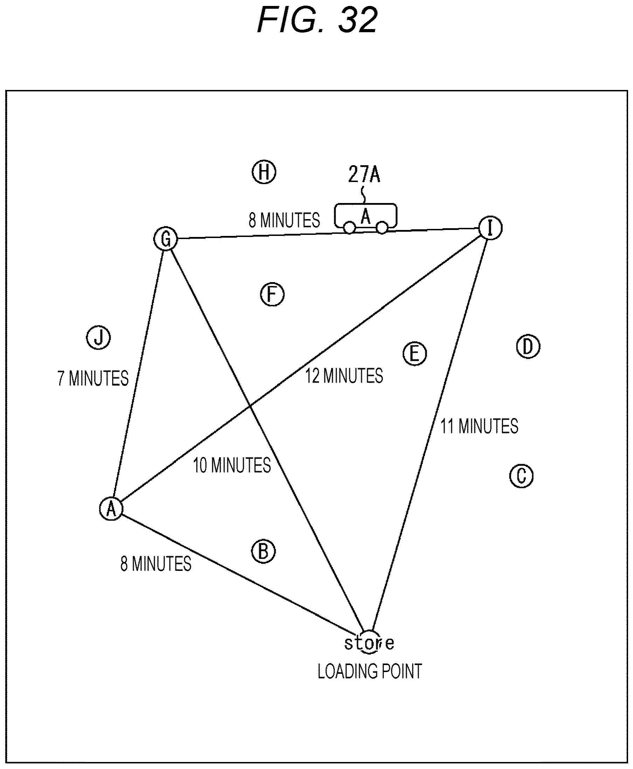

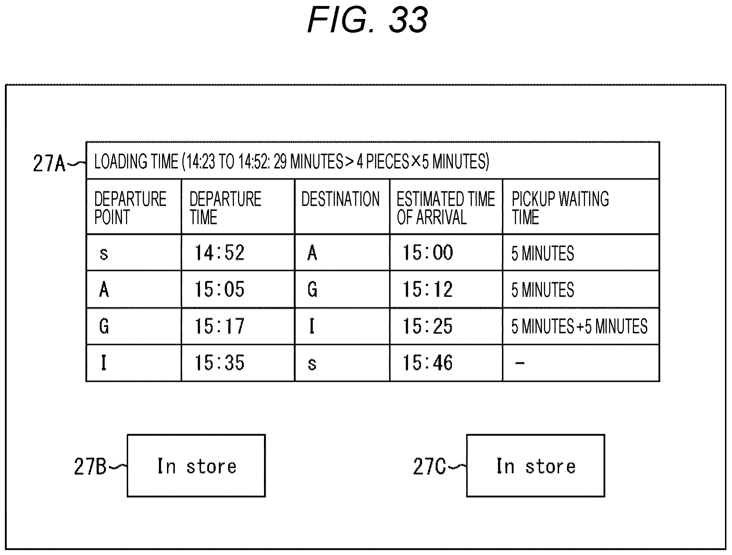

Both Figs. 32 and 33 are diagrams for describing the delivery state. It is assumed that the current delivery state is as shown in Fig. 32. This Fig. 32 is basically the same as Fig. 23, and baggage is requested to be delivered to three delivery destinations G, A, and I of 10 delivery destinations A to J. Then, one cart 27A is currently making deliveries. In a case where baggage designated to be redelivered is loaded into the cart 27A, the return time of the cart 27A is confirmed.

In a case where it is determined in the determination processing of step S2021 that the delivery is not re-delivery, or in a case where the return time is confirmed in step S2022, next, in step S2023, the confirmation unit 162 confirms the available time zone.

For example, in a case where a delivery is requested from the user 12 at time 15:20, a predetermined time A is added to the order time 15:20. The time A is a time required to load baggage into the box 28. As described above, this time A can be 30 minutes. In this case, the time obtained by adding 30 minutes to the order time is 15:50. Therefore, the user 12 can designate a time zone after 16:00 - 16:30. Of course, actually, a time zone to which the moving time to the destination is further added is the available time zone.

In a case of re-delivery, a time zone after the time obtained by adding the loading time to the return time is the available time zone.

In step S2024, the confirmation unit 162 confirms the delivery plan under delivery in each time zone. For example, as shown in Fig. 33, if the cart 27A is used for delivery based on the delivery plan and the cart 27B and the cart 27C are not used, the cart 27B or the cart 27C can be selected as a use object.

In step S2025, the confirmation unit 162 confirms the delivery plan under planning in each time zone. For example, in a case where a delivery of several pieces of baggage has already been planned for the cart 27B, it is confirmed whether another baggage can be added and delivered. The box 28 does not necessarily have to be full, but it is preferable to load more than half.

In step S2026, the display unit 163 displays receivable time zones or the like. In other words, out of the time zones designated by the user 12, the available time zone is displayed for the user 12 (smartphone 11).

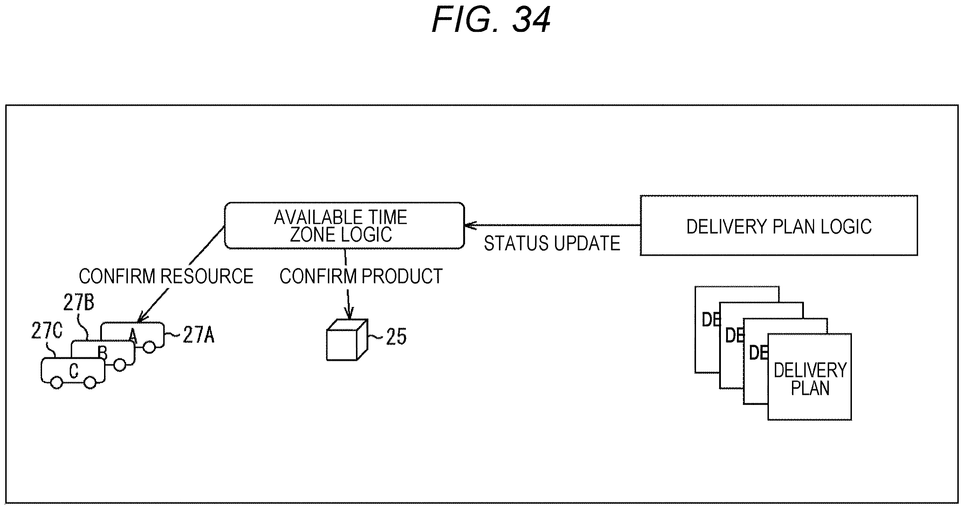

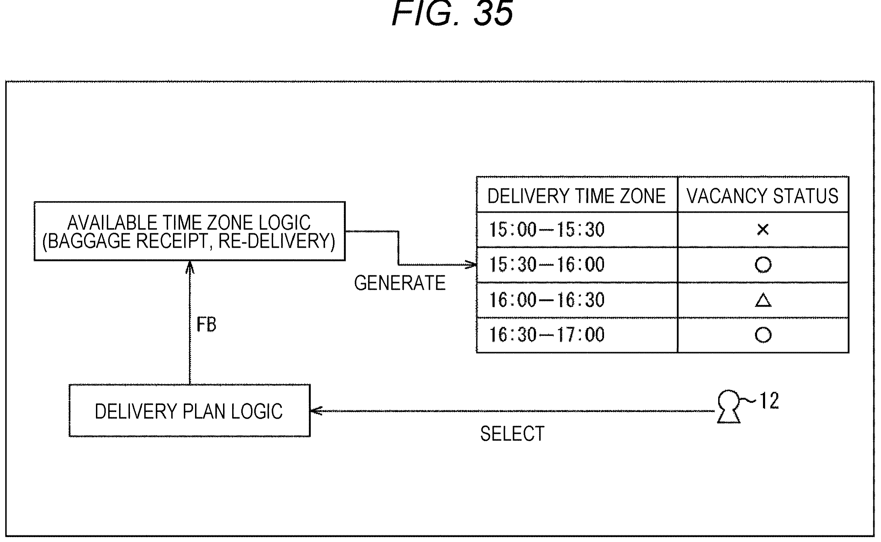

Figs. 34 and 35 are diagrams for describing the usage time zone search. As shown in Fig. 34, the available time zone cannot be determined only by available time zone logic, and the usage time zone is searched in cooperation with delivery plan logic. This is the reason why availability time zone search processing of Fig. 31 substantially corresponds to the processing of step S2002 of the flowchart of the delivery plan creation processing of Fig. 22. The available time zone logic confirms the baggage and the resource of the cart 27, but also needs to confirm the delivery plan managed by the delivery plan logic.

As shown in Fig. 35, on receipt of feedback of the delivery plan planned by the delivery plan logic on the basis of the selection by the user 12, the available time zone logic searches for the available time zone and generates the display screen. In the example of Fig. 35, the time zone of 15:00 - 15:30 is not available, and the time zones of 15:30 - 16:00 and 16:30 - 17:00 are available. Then, it is displayed that the time zone of 16:00 - 16:30 still has a margin, but not much can be delivered. The user 12 can further select the desired time zone from this display.

In a case of re-shipping, it is confirmed whether the product is present. In other words, the time when baggage will return is confirmed, and calculation is made from the subsequent time zone. If the estimated return time is 15:46, designation can be made from the time zone of 16:30 - 17:00, and the same logic as baggage receipt is applied.

The deliverable time zone can be calculated dynamically. In other words, calculation of a vacant desired delivery time zone is made from the current status (planning status, resource status, request status), and in view of the current status, the width of the available time zone can be changed dynamically. For example, to satisfy a desire of the user 12, the time zone can be gradually expanded from 30 minutes.

### <User interface (Figs. 36 to 49)>

Next, exemplary user interfaces will be described with reference to Figs. 36 to 49.

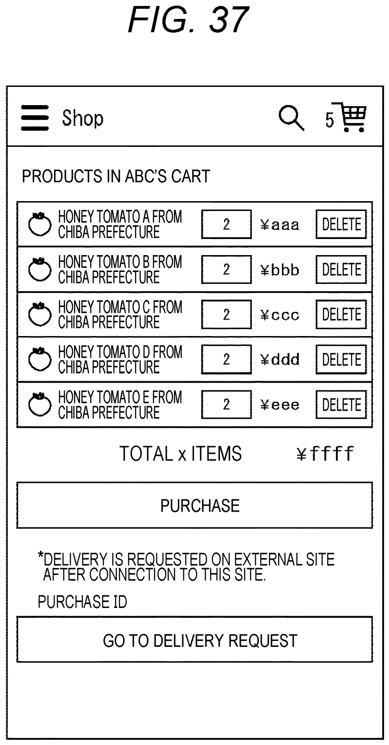

Figs. 36 and 37 are views showing the user interface of the buying site. Fig. 36 shows an exemplary screen for selecting the product 25 in the buying site 14. Tomatoes are displayed as the product 25, and the user 12 can select any of the tomatoes as a buying object.

Fig. 37 shows an exemplary screen for confirming the cart contents of the buying site 14. In other words, the bought product 25 (tomatoes in the case of Fig. 37) is displayed, and the user 12 can confirm details of the buying.

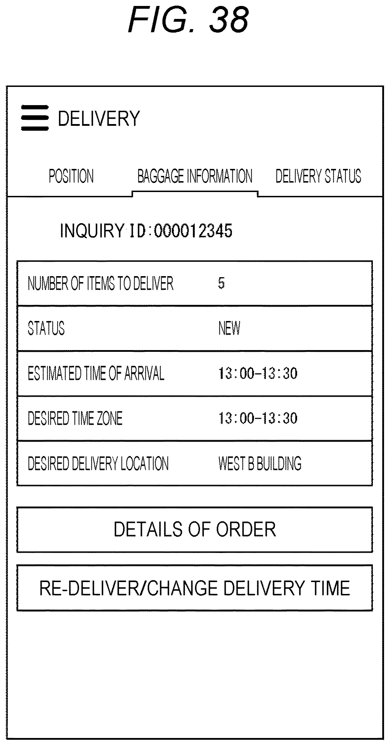

Figs. 38 to 43 are views showing a user interface of the delivery site. Figs. 38 to 40 show exemplary screens for status confirmation. Fig. 38 is a screen for confirming baggage information. In addition to "inquiry ID", "number of deliveries", "status", "estimated time of arrival", "desired time zone", "desired delivery location", or the like are displayed.

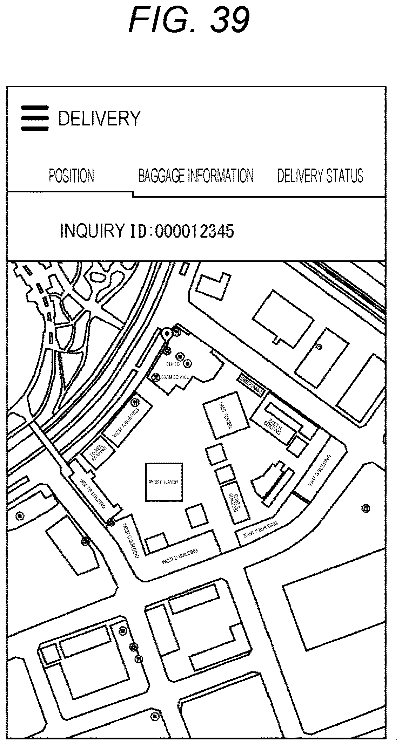

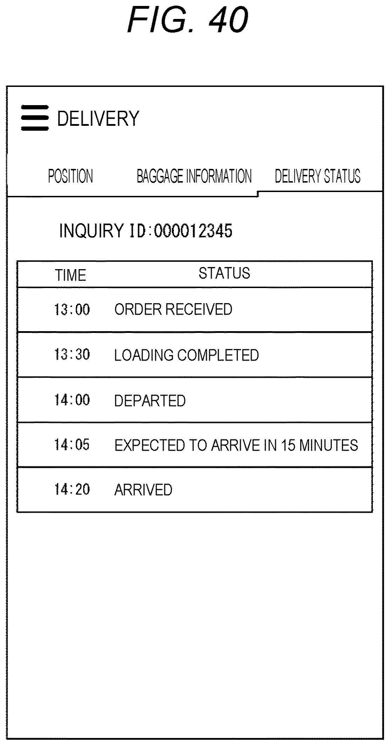

Fig. 39 is a screen for confirming positional information. The current position of the cart 27 is displayed on a map. Fig. 40 is a screen for confirming the delivery status. In addition to "inquiry ID", the time when an order is received, the time when loading is completed, the departure time, the time until arrival, the arrival time, or the like are displayed.

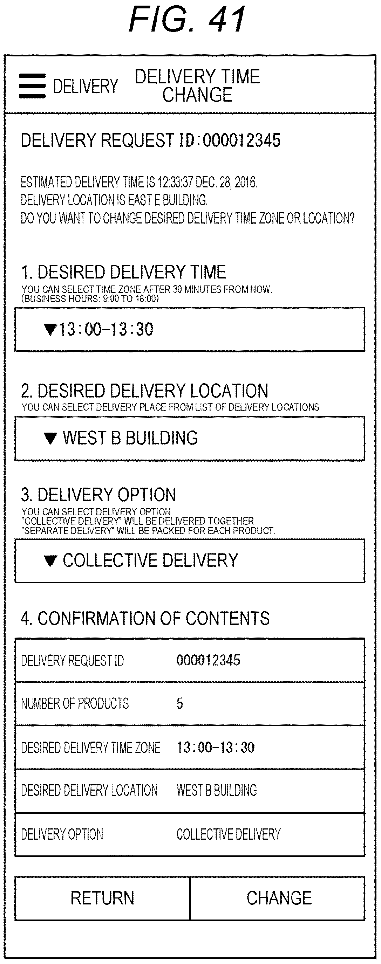

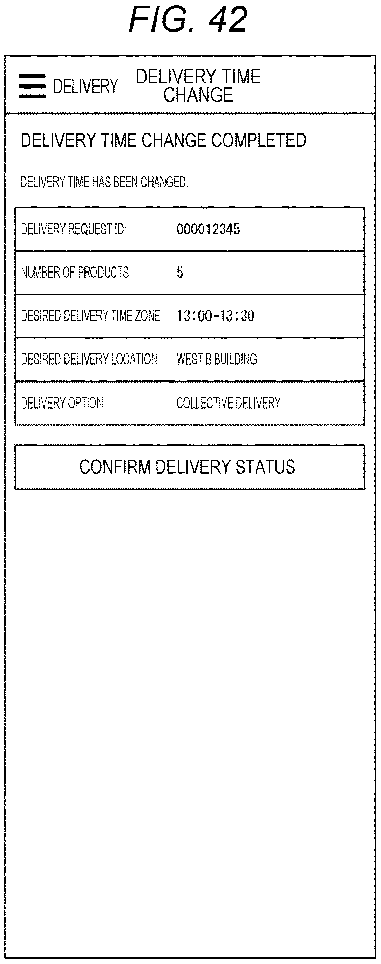

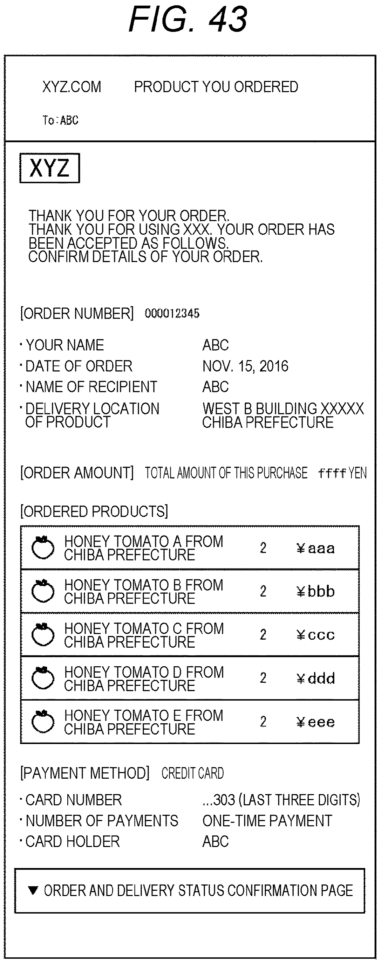

Figs. 41 and 42 show exemplary screens for changing delivery. Fig. 41 shows an exemplary screen for changing the delivery time. Information such as the desired delivery time, the desired delivery location, delivery option, and confirmation of contents is displayed. Fig. 42 shows an exemplary screen when the delivery time change is complete. Information such as the delivery request ID, number of products, desired delivery time zone, desired delivery location, delivery option, or the like are displayed. Fig. 43 shows an exemplary confirmation e-mail screen in which details of order are displayed.

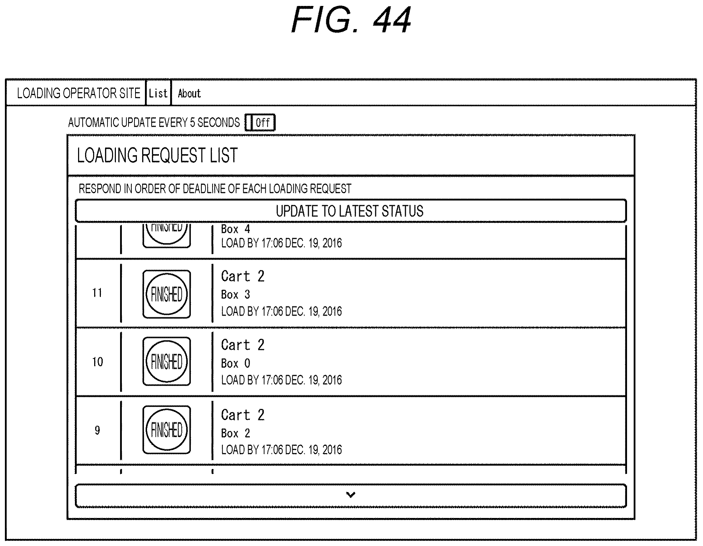

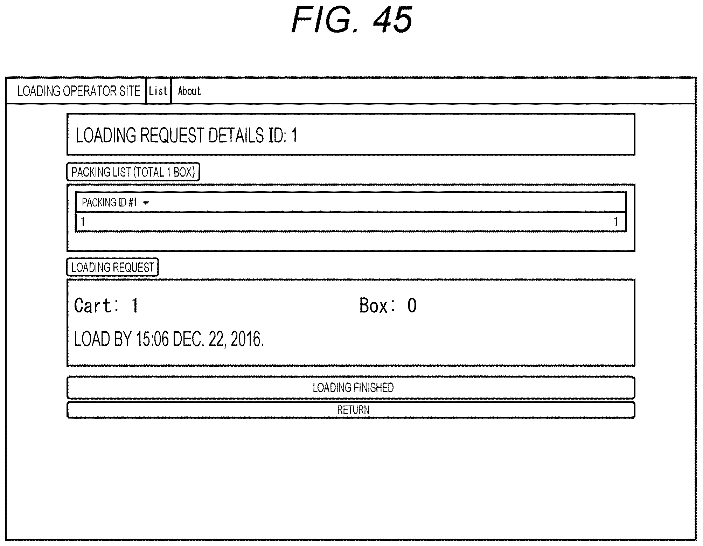

Figs. 44 and 45 are views showing user interfaces of the operator site. Fig. 44 shows a list of loading requests in the operator site 21. The cart 27 number and the box 28 number, and the date and time when the product 25 is to be loaded are displayed as a list. If a predetermined cart 27 number and box 28 number are selected from this screen, detailed information is displayed as shown in Fig. 45.

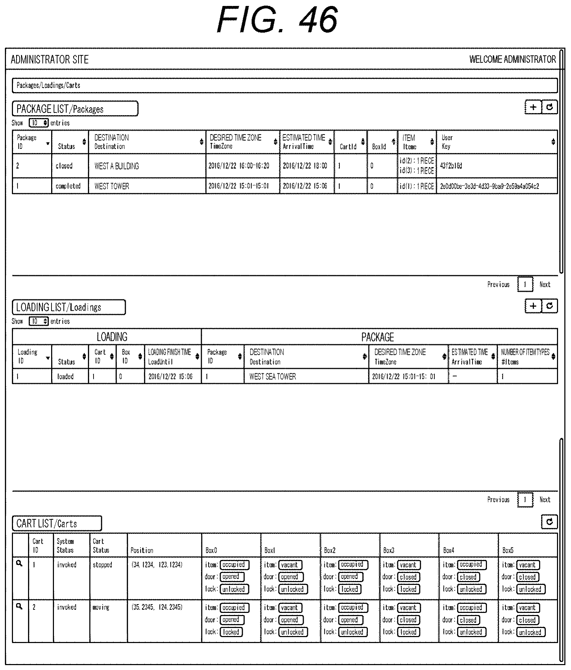

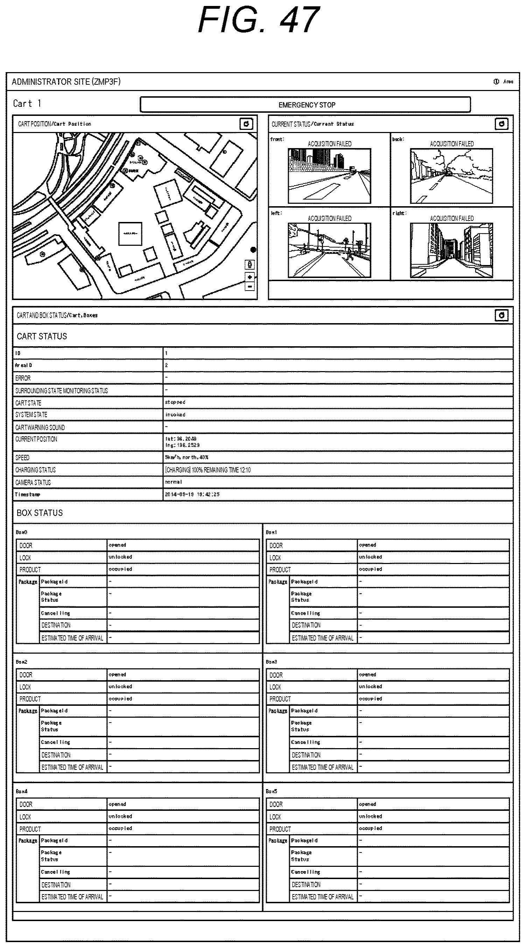

Figs. 46 and 47 are views showing user interfaces of the administration site. Fig. 46 shows a package list, a loading list, and a cart list. In the package list, the package ID, status, destination, desired time zone, estimated time, cart ID, box ID, product (item), and user key are displayed. In the loading list, the loading ID, status, cart ID, box ID, loading finish time, package ID, destination, desired time zone, estimated time, and the number of item types are displayed. In the cart list, the cart ID, system status, cart status, and position of each cart, state of the product, door, and lock of the boxes 0 to 5 are each displayed.

If the predetermined cart 27 is selected from the cart list of Fig. 46, a screen showing information regarding the cart 27 is displayed as shown in Fig. 47. A cart status and a box status are displayed in addition to the current position of the cart 27 on the map, and images of the front, rear, left, and right of the cart 27 captured by the camera 30. As the cart status, the cart ID, area ID, surrounding state monitoring status, cart state, system state, cart warning sound, current location, speed, charging status, camera status, time stamp, or the like are displayed.

As the box status, the door of each box, lock state, and product package information are displayed. As the package information, the package ID, package status, cancel, destination, estimated time of arrival, or the like are displayed.

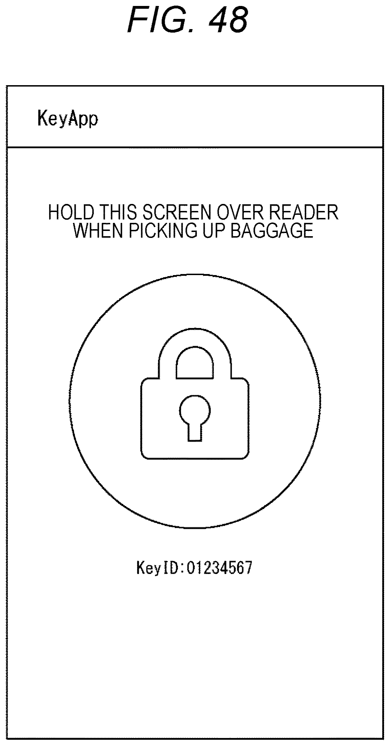

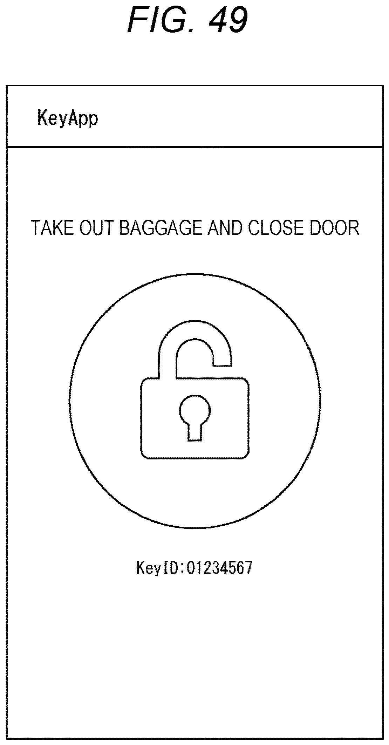

Figs. 48 and 49 are views showing user interfaces of a key application. These screens indicate exemplary display screens of the smartphone 11. Fig. 48 shows a screen before opening the door (before unlocking the lock). A message "Hold this screen over the reader when picking up baggage", an image of the lock in a locked state, and the key ID are displayed. Fig. 49 shows a screen after opening the door (after unlocking the lock). A message "Take out baggage and close door", an image of the lock in an unlocked state, and the key ID are displayed.

### <Modification>

Note that in the present technology, the following modification can be considered.

- Inverse estimation from demand generation
   Details of demand so far are learned, and the number of persons in a household, age, gender, and family structure can be estimated from a request generated at another location.
   This can be fed back to the buying site 14 and used for advertisements and "recommendations."
- Indoor application
   The number of floors is added to a request specifying method, and an operation status of elevators or the like is also linked to make predictions.
- Application to passengers
   There is not much difference from carrying things.
   The use case for ride sharing is different. This is applicable to pick-up on the way and getting off on the way.
- Load baggage on the way back
   This is not limited to one loading base, but can be applied to a case where there is a plurality of loading bases separately. Delivery is planned dynamically.
- In a case where the use case is different
   Returning laundry and returning rental items
   Rental items and cleaning items are brought and then collected. For collection only, this is applicable to moving even when "empty" at the beginning.
- Vending machine
   This is applicable to the examination of cooling time or the like and the timing prediction of replenishment of supplies.
- Charging stations for mobile phones or the like
   Prediction of remaining rechargeable batteries, prediction of charging timing for rechargeable batteries, mobile phones, portable music players, tablets, and personal computers.

Note that the present technology can have various modifications without departing from the essence of the present technology.

### <Computer (Fig. 50)>

A series of types of processing described above can be performed by hardware, or can be performed by software. In this case, for example, each device is configured by a personal computer as shown in Fig. 50. Fig. 50 is a block diagram showing an exemplary configuration of the personal computer.

In Fig. 50, a central processing unit (CPU) 921 performs various types of processing according to a program stored in a read only memory (ROM) 922 or a program loaded from a storage unit 928 to a random access memory (RAM) 923. The RAM 923 also stores data necessary for the CPU 921 to perform various types of processing or the like as needed.

The CPU 921, the ROM 922, and the RAM 923 are connected to one another via a bus 924. An input-output interface 925 is also connected to the bus 924.

An input unit 926 including a keyboard, a mouse, or the like, an output unit 927 including a display such as a CRT or LCD, a speaker, and the like, a storage unit 928 including a hard disk or the like, and a communication unit 929 including a modem, a terminal adapter, or the like are connected to the input-output interface 925. The communication unit 929 performs communication processing via a network.

A drive 930 is also connected to the input-output interface 925 as necessary. A removable medium 931 such as a magnetic disk, an optical disk, a magneto-optical disk, or a semiconductor memory is appropriately mounted. A computer program read therefrom is installed in the storage unit 928 as necessary.

Note that in this specification, steps describing the program to be recorded on the recording medium includes not only processing to be executed on a time-series basis according to the listed order, but also processing that may be not necessarily executed on a time-series basis but is executed in parallel or individually.

Furthermore, in the present specification, the system represents an entire device including a plurality of devices.

Furthermore, the embodiment of the present technology is not limited to the embodiment described above, and various modifications may be made without departing from the spirit of the present technology.

### <Other>

The present technology can also have the following configurations.
(1) A delivery management device for managing delivery of baggage by a moving body, the delivery management device including:
   a creation unit configured to create a delivery plan for the moving body on the basis of at least one of a loading time for loading the baggage into the moving body or a pickup time for picking up the baggage from the moving body, and a lap time via at least two points of a loading point for loading the baggage and a pickup point for picking up the baggage.
(2) The delivery management device according to the (1), in which the loading time is a time from an order time of a first delivery request to a departure time from the loading point, and the pickup time is a time from an estimated time of arrival of the moving body at the pickup point to a start time of a desired delivery time zone.
(3) The delivery management device according to the (1) or (2), in which the delivery plan is further created on the basis of a number of the pickup points and the estimated time of arrival.
(4) The delivery management device according to any one of the (1) to (3), in which the delivery plan is further created on the basis of a number of the moving bodies.
(5) The delivery management device according to any one of the (1) to (4), in which the delivery plan is created on the basis of both the loading time and the pickup time.
(6) A baggage delivery system including:
   a moving body configured to deliver loaded baggage; and
   a server configured to create a delivery plan for the moving body on the basis of at least one of a loading time for loading the baggage into the moving body or a pickup time for picking up the baggage from the moving body, and a lap time via at least two points of a loading point for loading the baggage and a pickup point for picking up the baggage.
(7) A program for causing a computer to perform processing to create a delivery plan for a moving body that delivers loaded baggage, the program including:
   a step of creating a delivery plan for the moving body on the basis of at least one of a loading time for loading the baggage into the moving body or a pickup time for picking up the baggage from the moving body, and a lap time via at least two points of a loading point for loading the baggage and a pickup point for picking up the baggage.

### REFERENCE SIGNS LIST

- 12: User
- 17: Server management system
- 25: Product
- 26: Package
- 27: Cart
- 28: Box
- 41: Delivery management system
- 44: Cart management system
- 111: Determination unit
- 112: Confirmation unit
- 113: Prediction unit
- 114: Creation unit
- 161: Determination unit
- 162: Confirmation unit
- 163: Display unit

## Claims

1. A delivery management device for managing delivery of baggage by a moving body, the delivery management device comprising:
a creation unit configured to create a delivery plan for the moving body on a basis of at least one of a loading time for loading the baggage into the moving body or a pickup time for picking up the baggage from the moving body, and a lap time via at least two points of a loading point for loading the baggage and a pickup point for picking up the baggage.

2. The delivery management device according to claim 1, wherein the loading time is a time from an order time of a first delivery request to a departure time from the loading point, and the pickup time is a time from an estimated time of arrival of the moving body at the pickup point to a start time of a desired delivery time zone.

3. The delivery management device according to claim 2, wherein the delivery plan is further created on a basis of a number of the pickup points and the estimated time of arrival.

4. The delivery management device according to claim 1, wherein the delivery plan is further created on a basis of a number of the moving bodies.

5. The delivery management device according to claim 1, wherein the delivery plan is created on a basis of both the loading time and the pickup time.

6. A baggage delivery system comprising:
a moving body configured to deliver loaded baggage; and
a server configured to create a delivery plan for the moving body on a basis of at least one of a loading time for loading the baggage into the moving body or a pickup time for picking up the baggage from the moving body, and a lap time via at least two points of a loading point for loading the baggage and a pickup point for picking up the baggage.

7. A program for causing a computer to perform processing to create a delivery plan for a moving body that delivers loaded baggage, the program comprising:
a step of creating a delivery plan for the moving body on a basis of at least one of a loading time for loading the baggage into the moving body or a pickup time for picking up the baggage from the moving body, and a lap time via at least two points of a loading point for loading the baggage and a pickup point for picking up the baggage.
